(19) **Europäisches Patentamt / European Patent Office / Office européen des brevets**

(11) **EP 4 645 679 A1**

(12) **EUROPEAN PATENT APPLICATION**

(43) Date of publication:
**05.11.2025  Bulletin 2025/45**

(21) Application number: **24173415.1**

(22) Date of filing: **30.04.2024**

(51) International Patent Classification (IPC):
**H02P 25/032** (2016.01)    **H02P 25/034** (2016.01)
**H02P 25/06** (2016.01)

(52) Cooperative Patent Classification (CPC):
**H02P 25/032; H02P 25/034; H02P 25/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Goodix Technology (HK) Company Limited**
**Sheung Shui (HK)**

(72) Inventors:
• **Phan Le, Kim**
  **6537 TL Nijmegen (NL)**

• **Schuurmans, Han Martijn**
  **6537 TL Nijmegen (NL)**
• **Gaasbeek, Rolf Iwan**
  **6537 TL Nijmegen (NL)**

(74) Representative: **Nederlandsch Octrooibureau**
**P.O. Box 29720**
**2502 LS The Hague (NL)**

Remarks:
Amended claims in accordance with Rule 137(2) EPC.

(54) **METHOD TO TRACK RESONANT FREQUENCY OF LINEAR RESONANT ACTUATORS USING STAIRCASE DRIVE SIGNAL**

(57)    The invention relates to a method for driving a linear resonant actuator (LRA), and a processing system in a driver chip for driving the LRA using such method. The method comprises providing a drive signal to the LRA, wherein the drive signal is configured such that each period of a current signal over the LRA has at least two intervals with nearly-constant non-zero current and substantially shorter duration than the period of the current signal, wherein the drive signal is an oscillating voltage or current drive signal. Furthermore, the invention relates to a control circuit configured to drive a LRA.

Fig. 3A

EP 4 645 679 A1

**Description**

**Technical Field**

The invention relates to a method for driving a linear resonant actuator (LRA), and a processing system in a driver chip for driving the LRA using such method. The method comprises providing a drive signal to the LRA, wherein the drive signal is configured such that each period of a current signal over the LRA has at least two intervals with nearly-constant non-zero current and substantially shorter duration than the period of the current signal, wherein the drive signal is an oscillating voltage or current drive signal. Furthermore, the invention relates to a control circuit configured to drive a LRA.

**Background Art**

Haptic motors are widely used nowadays in many daily electronic devices such as smartphones, smartwatches, gaming controllers, etc. The haptic motor creates experience by vibration for the user, thereby giving the user feedback of control, or as a part of multimedia experience. There are two main types of haptic motors: the Linear Resonant Actuator (LRA) and the Eccentric Rotating Mass (ERM) motor. In most modern and high-end applications, LRAs are used.

An LRA is basically a Voice Coil Motor (VCM) where electrical current running in a stationary coil actuates a moveable magnet back and forth, in a linear manner. The magnet is held by a set of springs and there is usually damping oil surrounding the moving part to increase working bandwidth. Thus, from the mechanical point of view, this system can be described as a Mass-Spring-Damper (MSD) system.

The LRA is driven by a driver chip (haptic driver) which typically contains a Pulse Width Modulation (PWM) power stage, logic blocks to generate driving patterns, sensing blocks where current and voltage supplying to the actuator can be monitored, and other blocks. Since the MSD system is in fact a resonator characterized by a resonant frequency f0, the driving pattern must be correctly generated to induce the desired vibration effects.

To generate a correct driving pattern for the LRA and/or minimize undesirable audible noise in an electronic device, the resonant frequency f0 of the system should be approximated with good accuracy. Electronic devices such as smartphones are usually systems that can exhibit various vibration modes within the audible range. Audible noise may arise when intentionally or unintentionally driving the LRA at a frequency similar to the resonant frequency of different components of the electronic device; for instance, a smartphone screen may resonate at 450 Hz, and a frame may resonate at several resonance frequencies, e.g., 1 kHz, 2 kHz, 5 kHz. The resonant frequency f0 of LRAs is usually about 150-200 Hertz (Hz), yet may vary dependent on the type of electronic device over a range between 100 and 300 Hz. Importantly, the resonance frequency of an LRA usually has a relatively narrow bandwidth, e.g. from 155 and 165 Hz. The Quality factor (Q-factor) of an LRA defines how quickly the vibration power of the system is reduced when the drive frequency is different from the resonant frequency f0. For instance, if an LRA has a Q factor of 15, and its f0 is 160 Hz, the vibration power is reduced twice or more when the driving frequency gets smaller than 155 Hz or greater than 165 Hz. Typically, the peak acceleration produced by a LRA may degrade by more than 30% if the resonant frequency used in the generation of the driving pattern deviates by 2% (about 3-4 Hz) from the real value. To generate sufficiently strong vibrations, it is therefore very important that the resonant frequency f0 is known with good accuracy. Here good accuracy is considered to be an error of 1 Hz or less. Nevertheless, it will be understood that the smaller the error, the better, as the strength of vibrations will increase.

Another issue of using a wrong frequency that deviates more than for instance 1 Hz, or about 1%, from the resonance frequency is that when a crisp vibration pattern is required (like a button click), the vibration cannot be stopped immediately after the haptic pattern, but would continue as decaying ringing for some period of time, which is an undesired effect. This can be prevented by adding a drive signal with a phase shift to the end of the vibration pattern. The shifted drive signal can brake the moving mass in the LRA. Knowing the resonant frequency f0 aids in defining the vibration pattern that most effectively brakes the LRA, thereby reducing the ringing. Hence also for this reason, it is desirable to estimate the resonance frequency with good accuracy.

Theoretically, the resonance frequency f0 of any MSD system is defined by the mass and the spring constant of the MSD system according to equation (1):

$$f_0 = \frac{1}{2\pi}\sqrt{\frac{k}{m}} \quad (1)$$

where m is the mass of the moving mass, i.e., a magnet, in the LRA, and k is the spring constant of the spring in the LRA. However, due to fabrication variations, the mass m and spring constant k are not very well controlled, which may lead to a variation in the resonance frequency f0 up to 5-10% from device to device. In addition, even for one electronic device, the spring constant k, may vary with temperature, life time, excursion level, and gravity direction. Consequently, also the resonance frequency may vary. Therefore, there is a need to measure and monitor the resonance frequency f0 of an LRA in an electronic device during its operational life, and preferably during a haptic event.

Known solutions to estimate the resonance frequency f0 include sensing the back electromagnetic force (BEMF) of the LRA. A first method for this is to pre-determine the resonance frequency by means of a separate measurement outside of a haptic event. This measurement is done in an electronic device, for example a smartphone, with the LRA inside. It can be done, for instance every time the phone is turned on, or only one time during the test procedure in the factory. In this measurement, the LRA is excited briefly by a pulse. After the pulse, the output of the driver is switched to an input of a voltage measurement circuit. Due to the resonance nature of the LRA, the moving mass is still vibrating for a short while and the vibration amplitude is decaying with time, i.e., the so-called ringing down. During this ringing down, the LRA produces a back-EMF signal which can be measured by the readout circuit. By measuring or counting the ringing down frequency, the resonance frequency f0 can be estimated. In any subsequent haptic events, the previously determined resonance frequency f0 can be used to generate the driving pattern.

A disadvantage of this method is that the resonance frequency f0 cannot be determined during a haptic event. Therefore the resonance frequency cannot be based on the actual conditions of the electronic device when the haptic event occurs. In addition, separate measurements to determine f0 cannot be done often, since it would make an annoying experience to the user. Consequently, the accuracy of the estimated resonance frequency f0 using such pre-determination methods may be relatively low.

A second method of estimating or tracking the resonance frequency using BEMF is disclosed in patent document US 9,054,627 and it is illustrated in Figure 1. This document discloses a method of tracking the resonance frequency of the LRA during a haptic event. The drive signal is a squared signal which only activates during so-called "on-intervals" (TDRV), which are interrupted by a series of "off-intervals" between the "on-intervals". During a first off-interval (before TDRV), the back-EMF of the LRA is measured. During the first off-interval, a timer is started at time TC1 when the back-EMF reaches a predetermined threshold, and after a predetermined delay (D1) has lapsed following the BEMF reaching the predetermined threshold during the first off interval, the LRA is driven over an on interval (TDRV) having a length and drive strength. A second off-interval is entered following the on interval, and during the second off-interval, the BEMF of the LRA is measured again. During the second off-interval, the timer is stopped at time TC2 when the back-EMF reaches the predetermined threshold. The value from the timer that corresponds to the duration between the BEMF reaching the predetermined threshold during the first off-interval and the BEMF reaching the predetermined threshold during the second off-interval (i.e., TC2-TC1) determines the length of a resonant period, from which the resonant frequency can be determined.

Disadvantageously, the implementation of the method is rather complex with synchronized switching between driving and measuring at every cycle, and since the on-interval is only a fraction of a full cycle, the driver cannot pump full energy into the LRA, which may result in smaller acceleration as compared to what it could otherwise deliver with full capability.

Furthermore, the probability of producing audible noise is increased by the squared wave. Since squared waves comprise multiple sine waves at the resonance frequency of the LRA (f0) and odd harmonics like 3*f0, 5*f0, etc. When, for example, driving the LRA with a square wave at 150 Hz, its 3rd harmonic might coincidentally align with one of the resonance modes of another component of the electronic device (e.g. the screen may have a resonant mode at 450 Hz), causing this component to resonate at this frequency and generate audible noise at this frequency. Undesirable audible noise may be perceived as high pitched audible noises at a frequency of multiples of the resonance frequency f0.

It is an object of the invention to provide a method for determining a resonance frequency and controlling the frequency of the drive signal that reduces and/or overcomes at least some of the problems of the prior art mentioned above.

**Summary of Invention**

Therefore, according to a first aspect of the invention, there is provided a method for driving a linear resonance actuator, LRA, in an electronic device, the method comprising providing a drive signal to the LRA, wherein the drive signal is configured such that, when the drive signal is provided to the LRA, each period of a current signal over the LRA has at least two intervals with nearly-constant non-zero current and substantially shorter duration than the period of the current signal, wherein the drive signal is an oscillating voltage or current drive signal; determining a back electromotive force (BEMF) of the LRA at times corresponding to the at least two intervals with nearly-constant non-zero current, wherein the BEMF is determined based on the current signal over the LRA and a voltage signal over the LRA; determining a phase difference ($\Delta\varphi$) between the BEMF and the current signal over the LRA; and adjusting a frequency of the drive signal using a feedback control loop such that the phase difference ($\Delta\varphi$) converges to zero.

The method may be executed during a haptic event, a drive signal is provided to the LRA with a vibration pattern sourced from either a voltage or a current source. While the drive signal may have various waveforms such as square waves, sawtooth waves, or triangle waves, the drive signal preferably has a sinewave shape. This sinewave nature of the drive signal maximizes the power transmission from the supply to the LRA and eliminates the generation of audible noise at multiples of the frequency of the drive signal, leading to undesired higher harmonics associated with e.g., square waves. The drive signal may be such that the at least two intervals with nearly-constant non-zero current in the current signal over the LRA have a duration that ensures that dynamics of the LRA remain unaltered throughout the haptic event. A current drive signal will have similar intervals with nearly-constant non-zero current as the current signal over the LRA. Conversely, a voltage drive signal will induce the current signal over the LRA to exhibit the at least two intervals with nearly-constant non-zero current, as described further below.

Advantageously, when the LRA is driven by the drive signal, the current signal over the LRA comprises at least two intervals with nearly-constant non-zero current and the calculation of the BEMF at those two intervals is simplified to equation (2). Since the BEMF mainly depends on the voltage and the current over the LRA and the derivative of the current signal over time in the LRA is nearly zero in those intervals, obtaining the BEMF at those at least two intervals facilitates an estimation of a BEMF signal in the time domain.

$$BEMF_{dI/dt \to 0} = V_{LRA}(t) - R_s I_{LRA}(t) \quad (2)$$

where $dI/dt \to 0$ is the derivative of the current signal over the LRA in the at least two intervals, $V_{LRA}(t)$ and $I_{LRA}(t)$ are respectively the voltage and current over the LRA and $R_s$ is the series DC resistance of the coil in the LRA.

The phase difference ($\Delta\varphi$) between the BEMF signal and the current signal over the LRA provides an indication of a frequency difference between the frequency of the drive signal and the resonance frequency of the LRA. In this context, the term "phase difference" refers to the phase shift or phase angle between the BEMF signal and the current signal over the LRA.

According to the theory of forced vibration, when the LRA operates at its resonance frequency, the velocity of the moving mass in the LRA is in phase with the force applied to it, influenced directly by the current in the coil. Since the BEMF is generated by the change in the magnetic flux density in the coil, it is proportional to the velocity of the moving mass (the magnet in the LRA). This results in the BEMF signal being in phase with the current signal over the LRA at the resonance frequency. As a result, a near-zero phase difference ($\Delta\varphi$) between the BEMF signal and the current signal over the LRA provides the indication that the LRA is operating close to its resonance frequency. For instance, the phase difference ($\Delta\varphi$) can indicate how much and in which direction the frequency of the drive signal deviates from the resonant frequency of the LRA. Using a feedback loop, the drive frequency is adjusted (tracked) such that $\Delta\varphi$ converges to zero. After several cycles of the method, the frequency of the drive signal reaches a steady state, and is close to the resonant frequency of the LRA.

Thus, the method is more accurate than other methods where the frequency of the drive signal has a pre-determined value that is usually obtained at a time considerably distant from the occurrence of the haptic event, such as when the phone is powered on, which could be days or even months before the haptic event. Factors like changes in environmental temperature, device aging, etc., can lead to a substantial deviation of the resonance frequency of the LRA at the time of the haptic event from the pre- determined value.

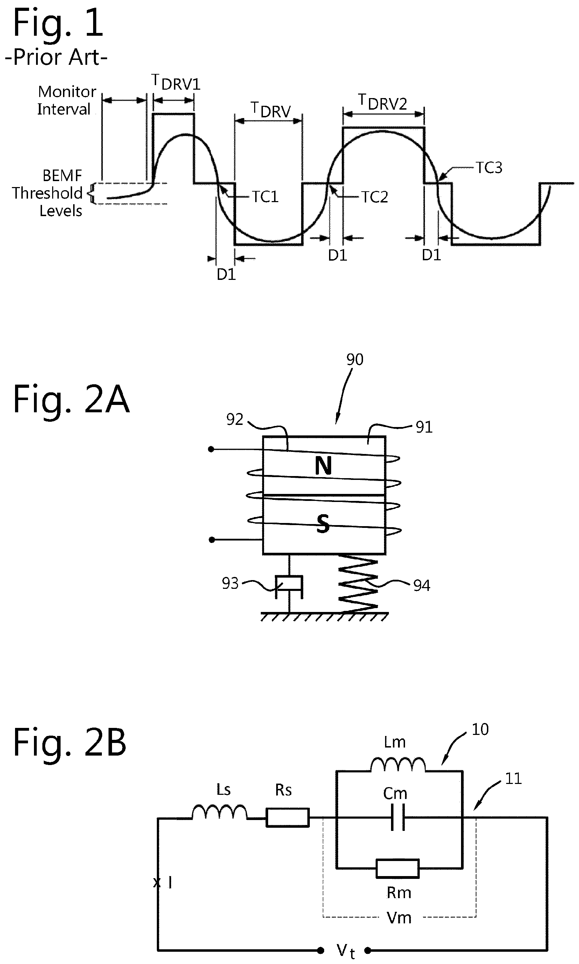

As the contribution of the series inductance Ls of the equivalent electrical model of the LRA as shown in Fig. 2B is minimized, this method further shows robustness against variations due to intermittent activation and deactivation of the LRA. Furthermore, the method provides an effective way to estimate the resonance frequency of the LRA while driving the LRA during the haptic event. Thus the method simplifies the design of the electronic device since there is no necessity to deactivate or power off the LRA, and to switch the output terminals to an input of a readout circuit during a signal period. There is also no necessity to have separate events for measuring the resonant frequency and for adjusting the frequency of the drive signal since the resonance frequency of the LRA may be estimated while the frequency of the drive signal is being adjusted. Separate events would require the vibration of the device, thereby unnecessarily disturbing the user, which can now be avoided. As mentioned before the drive signal is an oscillating voltage or current drive signal. If the drive signal is a voltage drive signal, the BEMF is thus determined based on the voltage drive signal and the current signal over the LRA, and if the drive signal is a current drive signal, the BEMF is thus determined based on the current drive signal and the voltage signal over the LRA. This provides flexibility on the method regardless of the nature of the drive signal. Optionally, the method further comprises measuring the voltage signal and/or the current signal over the LRA by sensors in the LRA and/or by sensors in a LRA driver chip in the electronic device. A current and a voltage sensor may be respectively positioned in series and parallel with the coil of the LRA and/or in the driver chip circuitry. When the voltage or current source of the drive signal is reliable (e.g., with $\pm 5\,\%$ error), the times of the intervals of nearly-constant non-zero current are known and it is possible to omit the respective sensor for a more compact and simpler electronic device. For instance, in the case of a voltage drive signal, the voltage sensor may be omitted, and similarly for the current drive signal, the current sensor may be omitted. Alternatively, sensors may still be used to validate or replace samples obtained from the voltage or current drive signal over the LRA, ensuring a more precise estimation of the resonant frequency.

The shape of the drive signal will depend on whether it is a voltage or a current drive signal. If the drive signal is a current drive signal, each period of the drive signal may have at least two intervals with nearly-constant non-zero current, and if the drive signal is a voltage drive signal, each period of the drive signal may have at least two intervals with non-zero voltage in which the magnitude of a slope of the drive signal within the non-zero voltage intervals is smaller than a slope the magnitude of a slope of the drive signal in the immediate vicinity of the non-zero voltage intervals. When the LRA is operated by a voltage drive signal, the current signal will often exhibit a different shape from the voltage drive signal due to the dynamics of the LRA and the generated BEMF, for example, a transformation from voltage to current of the LRA may be approximated by a third-order transfer function. A voltage drive signal wherein each period has at least two intervals with non-zero voltage in which the magnitude of the slope of the voltage drive signal within the intervals is smaller than the magnitude of the slope of the voltage drive signal (in the vicinity of) near the intervals will result in the at least two nearly-constant non-zero current intervals in the current over the LRA.

In the embodiment wherein the drive signal is a voltage drive signal, determining the BEMF signal comprises identifying, in the current signal over the LRA, the times corresponding to the at least two intervals with nearly-constant non-zero current; obtaining samples of the voltage drive signal and/or the voltage signal over the LRA at the identified times; obtaining samples of the current signal over the LRA at the identified times; and calculating a BEMF signal based on the samples of the voltage drive signal, and/or the voltage signal over the LRA, and the current signal over the LRA at the identified times. Thus, when a voltage drive signal is employed, the voltage samples used to calculate the BEMF may be from the voltage drive signal itself or from the voltage over the LRA obtained by a sensor, as previously mentioned. Samples of the voltage drive signal, and/or the voltage signal over the LRA, and the current signal over the LRA are obtained at these identified times to calculate the BEMF. Since the calculation of the BEMF is possible as the contribution of the inductor Ls is nearly zero during these intervals, as mentioned before in relation to equation (2). Advantageously, this offers a reliable way of calculating the BEMF, circumventing challenges associated with measuring and accounting for the inductance Ls.

In a further embodiment, identifying, in the current signal over the LRA, the times corresponding to the at least two intervals with nearly-constant non-zero current comprises: obtaining, from a memory in the electronic device, the times corresponding to the at least two intervals with nearly-constant non-zero current, and/or obtaining a derivative of the current signal over the LRA, and identifying in the current signal over the LRA where the absolute value of the derivative is below a pre-determined threshold.. When a relationship between voltage and current over the LRA can be accurately estimated, and the drive signal waveform is known, a precise timing of the intervals with nearly-constant non-zero current may be predicted in advance and saved in a memory in the electronic device. This provides a faster determination of the BEMF. Alternatively, to obtain samples of the current signal over the LRA when the current is nearly constant, it is also beneficial to employ a comparison with a pre-determined threshold, particularly given the complex dynamics of the LRA, where the derivative of the current signal may not precisely reach absolute zero at any given moment. A combination of these two options may also be employed to validate a predicted timing of the intervals with by nearly-constant non-zero current stored in the memory.

Besides tracking the resonant frequency, this methods may further comprise calculating the Q factor after the LRA has reached the resonating steady state whereby the BEMF signal is nearly constant and the phase difference ($\Delta\varphi$) is nearly zero. The Q factor (Q) may be calculated according to equation (3).

$$Q = \beta_0 + \beta_1 \omega_0 \frac{A_{BEMF}}{A_{InputVol}} + \beta_2 \left( \omega_0 \frac{A_{BEMF}}{A_{InputVol}} \right)^2 \ ... \quad (3)$$

where $\omega_0$ is angular frequency derived from the frequency of the drive signal $f_0$ ($\omega_0 = 2\pi f_0$) which was approximated to the resonant frequency of the LRA, $A_{BEMF}$ is the amplitude of the BEMF signal at resonating steady state of the LRA, $A_{InputVol}$ is the amplitude of the voltage drive signal and $\beta_{0,1,2}$ are coefficients determined during a factory calibration of the LRA.

Usually the LRA is driven with voltage drive signal with a fixed amplitude. As a result, there is a (slightly) non-linear dependency for $Q$ since the relation between voltage and force also depends on coefficients $\beta$ (due to changing of the electrical impedance). Advantageously, when the LRA reaches resonating steady state the frequency of the drive signal $f_0$ may be locked (adjusting is stopped) and the LRA will be vibrating at its resonant frequency for a number of periods before the haptic event ends. Just before the end of the haptic event, the Q factor may be calculated according to equation (3). Preferably, the Q factor as well as the drive signal frequency $f_0$ are stored in the memory at the end of the haptic event to be used for a next haptic event and provide an improved braking.

In an embodiment wherein the drive signal is a current drive signal and determining the BEMF signal comprises obtaining samples of the current drive signal, and/or current signal over the LRA, and the voltage signal over the LRA at the at least two intervals with nearly-constant non-zero current, and calculating a BEMF signal based on the samples of the current drive signal, and/or the current signal over the LRA, and the voltage signal over the LRA. Thus, when a current drive signal is employed, the current samples used to calculate the BEMF may be from the current drive signal itself or from the current over the LRA obtained by a sensor, as previously mentioned. The current drive signal offers the advantage that the current signal over the LRA closely mimics the provided drive signal. This similarity ensures that the timing and shape of intervals with nearly-constant non-zero current are known, facilitating the calculation of the BEMF signal.

In an embodiment, adjusting the frequency of the drive signal comprises increasing the frequency of the drive signal when the BEMF signal is leading the current signal over the LRA, and decreasing the frequency of the drive signal when the BEMF signal is lagging the current signal over the LRA. In this context, "leading" refers to when, e.g., the BEMF signal reaches its peak or trough before the current signal over the LRA does, indicating an advance in time of the BEMF signal. Conversely, "lagging" describes when, e.g., the BEMF signal reaches its peak or trough after the current signal over the LRA, suggesting a delay in time of the BEMF signal. The frequency of the drive signal is adjusted to match the resonance frequency of the LRA in function of the phase difference ($\Delta\varphi$). In this context, a positive phase difference ($\Delta\varphi$) may indicate that the BEMF signal is ahead of the drive current signal and hence the frequency of the current drive signal has to be increased. On the other hand, a negative phase difference ($\Delta\varphi$) may indicate that the current drive signal is ahead of the BEMF signal and hence the frequency of the current drive signal has to be decreased. The skilled person will understand that the sign (positive or negative) of the phase difference ($\Delta\varphi$) may be reversed depending on its definition in any particular system, e.g. a negative phase difference ($\Delta\varphi$) may indicate that the current drive signal is lagging the BEMF signal. Consequently, the signal, i.e., the BEMF signal or current signal, used to describe the phase relationship of one signal to another is interchangeable.

In an embodiment, the voltage or current drive signal has zero-mean and the at least two intervals with nearly-constant non-zero current are located in the vicinity of the zero-crossing points of the current signal over the LRA and/or at both positive and negative phases of the current signal over the LRA. The phase difference ($\Delta\varphi$) between the BEMF signal and the current signal over the LRA can determined through different methods, for example, fitting, zero-crossing, modified Hilbert transform, Fast Fourier Transformation, or a dot product; preferably, the zero-crossing method is used. To estimate the zero-crossing points of the BEMF signal, only intervals with nearly-constant non-zero current in the vicinity of the zero-crossing points of the current signal are necessary. Preferably, these intervals are in both positive and negative phases of the current signal to achieve a more precise estimation of the phase difference. Alternatively, the intervals are located in the current signal over the LRA at a certain frequency, the frequency of the at least two intervals with nearly-constant non-zero current is at least two times higher than the resonant frequency of the LRA plus a best-known margin of sample-to-sample variation and temperature variation of the resonant frequency of the LRA. Advantageously, this frequency of the intervals with nearly-constant non-zero current allows for the reconstruction of the BEMF signal in the time-domain from discrete samples according to the Nyquist law, and accounts for a potential change of the drive signal from sample to sample, and from temperature fluctuations. This contributes to an enhanced estimation of both the phase difference and the resonant frequency of the LRA. The range of sample-to-sample variation and temperature fluctuation in the resonant frequency of the LRA may include potential variations in typical LRAs and fluctuations in temperature that the LRA may encounter. For example, typical LRAs have a resonant frequency in a range between 100 Hz and 300 Hz. In an embodiment, the frequency of the at least two intervals with nearly-constant non-zero current is at least 650 Hz.

In an embodiment, an initial frequency of the drive signal before it is provided to the LRA provided to the LRA is a pre-determined estimate of the resonance frequency of the LR, which is provided from a memory in the electronic device and/or is a best-guessed estimate of the resonance frequency of the LRA. To initiate the tracking of the resonance frequency of the LRA, the initial frequency should be established for the drive signal. The value of this initial frequency can be a frequency previously stored in the memory from a preceding haptic event. Alternatively, the initial frequency may be a best-guessed estimate of the resonance frequency of the LRA, which could be determined based on the type and manufacturing details of the LRA. The proximity of the initial frequency to the resonant frequency of the LRA accelerates the method, requiring fewer adjustments to the drive frequency.

In an embodiment, the method further comprises further adding a Direct Current (DC) or low frequency signal to the drive signal for measuring a resistance of the LRA. Here the term "sensing signal" is used to indicate a DC signal or a single tone signal having a low frequency. This signal allows for measuring the resistance of the coil. In this context the term "low frequency" should be interpreted as sufficiently different from the frequency of the drive signal to prevent any mechanical effect influencing the measurement. In addition, the frequency of the sensing signal should be low enough to induce an insignificant impedance of the series inductance Ls with respect to the series resistance Rs. For example, in an embodiment the frequency of the sensing is selected such that the magnitude of the impedance of the series inductance Ls is at least 10 times smaller than the series resistance Rs. From knowing approximately values of the series inductance and resistance, it can be found how low the frequency of the sensing signal should be.

In an embodiment, the intervals in the drive signal consists of a minimum of two samples and a maximum corresponding to a number of samples in a period of the drive signal divided by a number of intervals with nearly-constant non-zero current per period. The drive signal is preferably digitally generated for ease of generation and adjustment. A minimum of two samples is required for the drive signal to induce intervals of nearly-constant non-zero current in the resulting current signal. However, as the number of samples per interval approaches the maximum, it is likely to lead to a current signal with a less pronounced sine wave shape.

In an embodiment, the method further comprises measuring the voltage signal and/or the current signal over the LRA by sensors in the LRA and/or by sensors in a LRA driver chip in the electronic device. A current and a voltage sensor may be respectively positioned in series and parallel with the coil of the LRA and/or in the driver chip circuitry. When the voltage or current source of the drive signal is reliable, it is possible to omit the respective sensor for a more compact and simpler electronic device. For instance, in the case of a voltage drive signal, the voltage sensor may be omitted, and similarly for the current drive signal, the current sensor may be omitted. Alternatively, sensors may still be used to validate or replace the samples obtained from the voltage or current drive signal over the LRA, ensuring a more precise estimation of the resonant frequency.

According to another aspect of the invention, and in accordance with the advantages of the invention as described herein above, there is provided a processing system for driving the Linear Resonance Actuator, LRA. The processing system comprises a processor and a memory operatively connected thereto. The processor is configured to perform any of the methods described herein above. The processing system can be integrated into a single integrated circuit and in connection with the LRA. This integration ensures independent functionality, offering a versatile solution for diverse applications. The processing system may be configured to carried out the method through software. In this configuration, a wave generator within the software may be responsible for generating and adjusting the frequency of the drive signal.

According to an important aspect of the invention, and in accordance with the advantages of the invention as described herein above there is provided an electronic device comprising the processing system according to the invention. The electronic device further comprises a linear resonant actuator, LRA. The electronic device can be a human-machine interface device, such as a telephone, a smartphone, a smartwatch, a gaming device, a personal media player, a laptop, a tablet, a controller of a medical device, or inside a dashboard of a car or vehicle, or another type of portable device, battery powered device, computing device, communications device, or device with a touchscreen.

According to an important aspect of the invention, and in accordance with the advantages as described herein above, the method is implemented in the hardware of the electronic device. In an embodiment, determining the phase difference ($\Delta\varphi$) between the BEMF signal and the current signal over the LRA comprises determining the phase difference ($\Delta\varphi$) signal between the BEMF signal and the current over the LRA by a phase detector circuit to generate a phase-difference signal; scaling the phase difference signal by a factor P by a gain block, and integrating the phase difference signal by an integration block. Adjusting the frequency of the drive signal using the feedback control loop comprises adjusting a feedback divider number M of a phase-locked loop based on the integrated phase difference signal, wherein the phase-locked loop is locked into a reference signal from of an oscillator. A hardware implementation may contribute to reduced latency and better robustness in comparison to the software alternative.

In an embodiment, determining the phase difference ($\Delta\varphi$) signal by a phase detector circuit to generate a phase difference signal ($\Delta\varphi$) comprises: differencing the current signal over the LRA by an analog differentiator; detecting, by an analog threshold detector, where an absolute value of the differentiated current signal is below a pre-determined threshold; sampling, by a voltage sampler and a current sampler, the voltage signal and current signal over the LRA; calculating the BEMF signal by a BEMF calculator block; and determining by the phase detector, the phase difference ($\Delta\varphi$) signal between the BEMF signal and the current signal over the LRA. The analog threshold detector outputs a trigger when the differentiated current signal is below the pre-determined threshold, indicating the intervals with nearly-constant non-zero current, the trigger causes the current sampler and the voltage sampler to obtain samples at times of the intervals with nearly-constant non-zero current. The current and voltage samplers may also serve as Analog-to-Digital Converters (ADCs) which convert the sampled current and voltage to digital signals. Subsequently, the BEMF is calculated in a simple digital BEMF calculator block.

According to yet another aspect of the invention, there is provided a control circuit configured to drive a linear resonance actuator, LRA, the control circuit comprises a Phase Locked Loop, PLL, configured to receive a reference clock from an oscillator and output a system clock based on a received feedback divider number, M, wherein the feedback divider number M has a pre-determined initial value and is dynamically adjusted based on an integration of a phase difference ($\Delta\varphi$) signal between a BEMF and a current over the LRA; divider means configured to receive the system clock of the PLL and output a sampling rate based on the received system clock; and a Wave Table generator means, configured to receive the sampling rate and generate a pattern or wave to output to a driver of the LRA.

In an embodiment, the system clock is determined as the multiplicative product of the reference clock and the feedback divider number M and/or the sampling rate is determined as the reference clock divided by a frequency divider number N. For example, $N = 2^{19}$.

## Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.

Figure 1 illustrates a method in the prior art for estimating or tracking the resonance frequency of a haptic actuator.

Figure 2A shows a schematic model of a mass-spring-damper (MSD) system.

Figure 2B shows an equivalent electrical model of the MSD system in Fig. 2A.

Figure 3A shows examples of the current over the LRA having a base waveform of a sinewave and two or more intervals of nearly -constant and non-zero current per period,

Figure 3B shows an example in which the intervals of nearly -constant and non-zero current amplitude have a regular timely occurrence, while in Fig. 3B the intervals of nearly-constant and non-zero current amplitude are located in the vicinity of the zero-crossing of the current signal.

Figure 4A shows examples of intervals in voltage drive signals and their corresponding potential effect in the current signal over the LRA. Figure 4B shows a further example of a voltage drive signal that induces, in a current signal over the LRA, intervals of nearly-constant and non-zero current.

Figure 5 shows a method to identify intervals with nearly-constant non-zero current in a current signal.

Figure 6A provides an illustration of an estimated BEMF signal alongside a current signal over the LRA, captured at the intervals with nearly-constant non-zero current.

Figure 6B shows a close-up view of Figure 6A.

Figure 7 illustrate various examples of a phase difference ($\Delta\varphi$) between the current signal over the LRA and an estimated BEMF signal as a function of time for different frequencies of the drive signal around the resonance frequency of the LRA.

Figure 8 illustrates the phase difference ($\Delta\varphi$) at resonating steady state of the LRA with the velocity amplitude vs. driving frequency (i.e., frequency of the drive signal) on the same graph.

Figure 9 illustrates simulation results of Q factor for five hypothetical LRAs of the same type.

Figure 10A shows an example of a method to generate a drive signal, in particular a current drive signal.

Figure 10B illustrates the construction of the drive signal by using the method showed in Figure 10A.

Figure 10C shows another example of a method to generate a drive signal, in particular a voltage drive signal.

Figure 11A schematically illustrates an example of an electronic device with a driver chip for driving a LRA and in which a method for driving an LRA according to the invention is at least partially software-implemented. Figure 11B schematically illustrates a second example of an electronic device with a driver chip for driving a LRA in which a method for driving an LRA according to the invention is at least partially software-implemented.

Figure 12 shows a block diagram of a hardware implementation of a method for driving a LRA according to the invention.

Figure 13 illustrates different curves of the phase difference ($\Delta\varphi$) between the BEMF and current signals vs. the frequency of the drive signal for varying values of Rs.

The figures are meant for illustrative purposes only, and do not serve as restriction of the scope or the protection as laid down by the claims.

**Description of Embodiments**

The following is a description of certain embodiments of the invention, given by way of example only and with reference to the figures.

As previously mentioned, from the mechanical point of view, an LRA can be described as a Mass-Spring-Damper (MSD) system. Figure 2A shows a schematic model of a MSD system. The system 90 comprises a magnet 91, a coil 92, a damper 93, and a spring 94. Figure 2B shows an equivalent electrical model of the MSD system in Fig. 2A. The equivalent electrical model 10 comprises a series inductance Ls, a series resistance Rs, a motional inductance Lm, a motional capacitance Cm, and a motional resistance Rm. The series inductance Ls and resistance Rs are the inductance and the DC resistance of the coil 92, respectively. The motional inductance Lm, motional capacitance Cm, and motional resistance Rm are part of the motional LCR circuit 11, and represent the motional effect of the magnet 91, damper 93 and spring 94 in the LRA. The LRA is configured to be connected to an AC power supply (not shown), which sends an alternating electrical current through the coil 92 of the LRA.

In the electrical model of Fig 2B, the transfer function ($TF_{Vtol}$) in the Laplace domain from voltage to current of the LRA may be a third order function according to equation (4), where s is the complex frequency domain parameter of the Laplace transform.

$$TF_{V\,to\,I} = \frac{Cm*Lm*Rm*s^2 + Lm*s + Rm}{Ls*Cm*Lm*Rm*s^3 + (Ls*Lm+Rs*Cm*Lm*Rm)*s^2 + (Ls*Rm+Rs*Lm+Lm*Rm)*s + Rs*Rm} \quad (4)$$

In the combined mechanical model of Fig. 2A and electrical model of Fig. 2B, when a voltage is applied to the LRA the moving mass is set in motion. The transfer function from voltage to velocity ($TF_{V\,to\,v}$) may be a fifth order function according to equation (5). Figures described below illustrate the invention by simulations with realistic parameters of a typical LRA: Rs=14.3 Ω; Ls = 0.47 mH; Lm = 0.22 mH; Cm = 4.6 mF; Rm=2.4 Ω, (resonance frequency) f0=158.2 Hz, Q=11, and a driving voltage amplitude of 1V (if mentioned).

$$TF_{V\_to\_v} = \frac{Num}{Den} \quad (5)$$

where:

$$Num = Cm*Lm*Rm*s^3 + Lm*s^2 + Rm*s$$

$Den =$

$+ Ls*Cm*Lm*Rm*s^5$

$+ (2*Ls*Lm + Rs*Cm*Lm*Rm)*s^4$

$+ (2*Ls*Rm + 2*Rs*Lm + Lm*Rm + Ls*Lm/Rm/Cm)*s^3$

$+ (2*Rs*Rm + 2*Ls/Cm + Rs*Lm/Rm/Cm + Lm/Cm)*s^2$

$+ (2*Rs/Cm + Ls*Rm/Lm/Cm + Rm/Cm)*s$

$+ Rs*Rm/Lm/Cm$

The LRA depicted in Fig. 2A and 2B is typically driven by a driver chip (haptic driver) in an electronic device which typically contains means to generate patterns for a drive signal, an amplifier configured to amplify the driving signal before it is provided to the LRA, and sensors in the LRA itself and/or in the driver chip to measure current and/or voltage over the LRA. Each LRA is characterized by a resonant frequency fo, thus for driving the LRA efficiently, the drive signal should be correctly generated at the resonant frequency to induce the desired vibration effects.

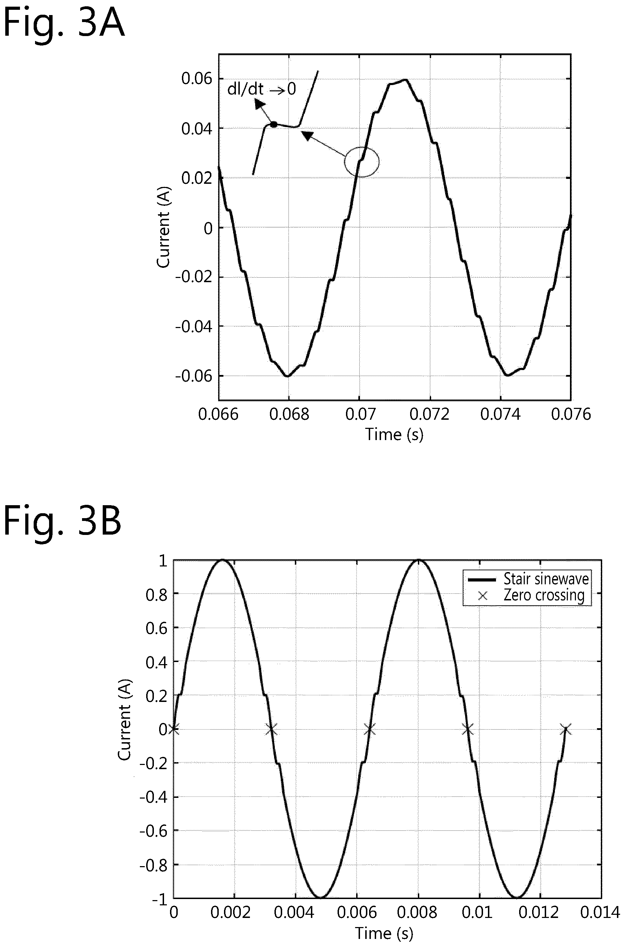

According to a method of the invention the oscillating drive signal may be supplied by a current or a voltage source. The drive signal preferably resembles a sine or a cosine wave and is designed to ensure that every period of the current signal over the LRA includes at least two intervals of nearly -constant and non-zero current amplitude, resulting in a derivative of the current signal over time being nearly zero during the least two intervals. Figures 3A and 3B provide examples of the current over the LRA having a base waveform of a sinewave and two or more intervals of nearly -constant and non-zero current per period. Within these intervals, there is at least one instant in which the derivative of the current signal is nearly zero $dI(t)/dt \approx 0$. In Fig. 3A the intervals of nearly-constant and non-zero current amplitude have a frequency, i.e., a regular timely occurrence, while in Fig. 3B these intervals are located in the vicinity of the zero-crossing of the current signal. Achieving these intervals when the drive signal is provided by a current source is relatively easy as the current drive signal can be precisely designed. However, implementing a current source may require the use of a class A-B amplifier within the driver chip. Class A-B amplifiers, while capable of functioning as current sources, are less energy-efficient compared to, for example, class-D amplifiers. Class-D amplifiers, known for their energy efficiency, are well-suited for fast dynamic operations where the LRA may require a maximum voltage of up to 12V. Nevertheless, class-D amplifiers behave more like a voltage source. Hence, it is preferable to drive the LRA with a voltage drive signal, particularly for the applications described here of providing haptic feedback to a user.

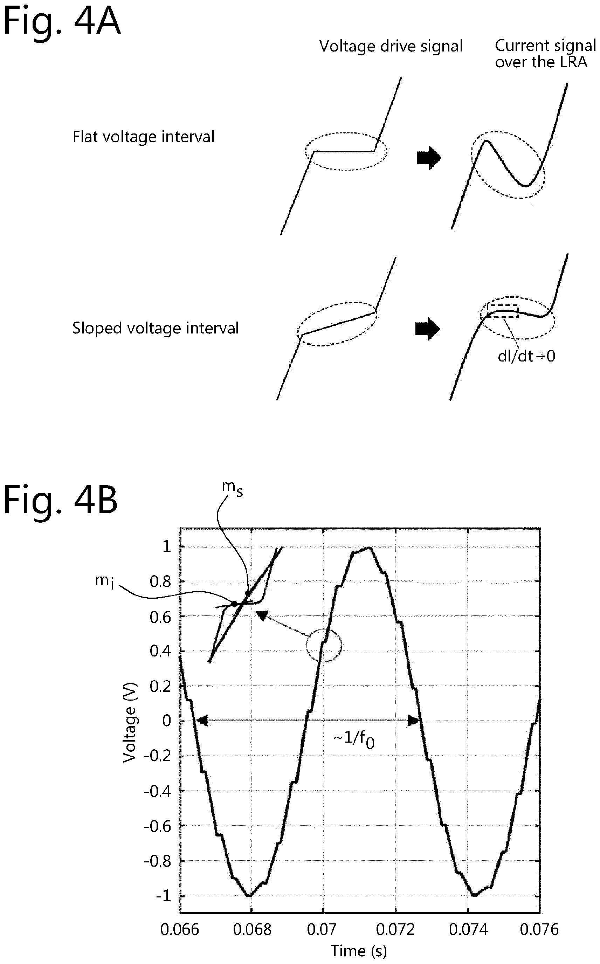

As there is not a linear relationship between the voltage and the current (equation (4)), the dynamics of the LRA alters the shape of the voltage drive signal. Figure 4A shows examples of intervals in voltage drive signals and their corresponding potential effect in the current signal over the LRA. A voltage drive signal including a substantially flat voltage interval will likely result in a substantially skewed interval in the current signal over the LRA, while a voltage drive signal including a sloped non-zero interval will likely result in an interval with nearly-content non-zero interval in the current signal over the LRA, which is preferable to facilitate the calculation of the BEMF signal as discussed below. Figure 4B shows a further example of a voltage drive signal that induces, in a current signal over the LRA (e.g., the current signal in Fig. 3A), intervals of nearly-constant and non-zero current. The voltage drive signal in Figure 4B, comprises sloped intervals with a magnitude ($m_i$) smaller than a magnitude of a slope of the sinewave ($m_s$) of the voltage drive signal, outside said intervals. The slope $m_i$ within the sloped intervals can be determined based on the transfer function of equation (4) through simulation and/or experimentation. This approach is preferable due to the dependency of the resultant current over the LRA not only on the slope $m_i$ within these sloped intervals but also on the frequency of the voltage drive signal. In the example of Fig. 4B, the voltage drive signal has a frequency of 158 Hz, which is close to a typical resonant frequency of LRAs, and has about 15 sloped intervals per period of the voltage drive signal. When this voltage drive signal is applied to the LRA, due to the reaction of the LRA, the intervals of nearly-constant non-zero current have a shape similar to that shown in Fig. 3A. At each interval of nearly-constant non-zero current, times where the current signal is substantially constant may still be identified with the method according to the present invention.

If frequent intervals with nearly-constant non-zero current are used, a frequency of the intervals depends on the LRA type and the application. Frequent intervals offer the advantage to enable an estimation of the BEMF signal (i.e. BEMF over time). In the example of Fig. 3A the frequency of the intervals is about 2.4kHz. The drive signal is preferably digitally generated by a processor. A minimum of two samples of the drive signal is required to induce intervals of nearly-constant non-zero current in the resulting current signal over the LRA. A maximum number of samples for the intervals in the drive signal may correspond to a number of samples in a period of the current signal divided by a number of intervals with nearly-constant non-zero current per period. However, as the number of samples per interval in the drive signal approaches the maximum, the current signal over the LRA will have a less pronounced sine wave shape. For example, if the frequency of the current signal over the LRA is $f_I$=24000Hz and the frequency of the intervals of nearly-constant non-zero current is $f_{in}$=2400Hz, the maximum number of samples in an interval of the drive signal is 10 samples (24000/2400). In order to correctly reconstruct the BEMF signal, the frequency of the intervals with nearly-constant non-zero current should be at least 2 times the highest resonant frequency of all possible LRA types, according to Nyquist's theory. In the example of Fig. 3A, the frequency of the intervals is 2.4 kHz, which creates about 15 intervals per period of in the current signal at 158 Hz.

The intervals with nearly-constant and non-zero current, whether resulting from a voltage or current drive signal, are of relatively short duration compared to the period of the drive signal. This ensures that the power of the current signal is maintained in the sine wave frequency, preventing these brief intervals from significantly impacting the dynamics of the LRA. Therefore, from the mechanical point of view, the LRA is driven by a harmonic force. Since the frequency components related to the intervals and its harmonics are typically >20-30 dB smaller than the sinewave amplitude, the staircase signal does not create any audible noise in the LRA, unlike in other prior-arts where the square wave would potentially cause audible noise. Consequently, this approach results in a more precise vibration pattern and enables the LRA to utilize full energy from the drive signal. This optimization, in turn, facilitates higher acceleration compared to drive signals with a more pronounced square shape, as illustrated in Fig. 1.

The intervals of nearly-constant and non-zero current amplitude facilitate the calculation of the BEMF signal. The LRA produces a BEMF according to equation (6). The BEMF is a function of the voltage ($V_{in}$), current ($I(t)$) and a change of current overtime ($dI(t)/dt$) over the LRA.

$$BEMF = V_{in} - R_s I(t) - L_s \frac{dI(t)}{dt} \quad (6)$$

where Rs and Ls are series DC resistance and inductance of the coil in the LRA. The series resistance Rs can be determined at an initialization step, for instance, when the LRA is powered on or during a factory test. However, calculating BEMF when an AC current is being sent to the LRA (as the drive signal) is difficult because of the last term of equation (6). During the sinewave excitation of the drive signal, since the current is continuously changing and Ls is unknown, determination of BEMF is almost impossible. Furthermore, the inductance Ls is typically unknown and difficult to measure because it is influenced by the frequency of the current in the coil and the ambient temperature.

When the LRA is driven by the at least two intervals with nearly-constant non-zero current, the calculation of the BEMF is simplified from equation (6) to equation (2), where the last term of equation (6) will be approximately zero and the LRA produces a BEMF that mainly depends on the voltage and the current over the LRA.

$$BEMF_{dI/dt \to 0} = V_{LRA} - R_s I(t) \quad (2)$$

The voltage and current signals over the LRA may be obtained by sensors in the LRA or in the driver chip connected to it. Depending on whether a current or a voltage drive signal is used, the measurement of the current or voltage of the LRA can be omitted. For example, a driver chip may receive a command (from an external input signal) to output 1V of amplitude in the voltage drive signal and actually provide the voltage drive signal with a small error, e.g., 1.001V. Here it can still be considered that the voltage source is reliable and measuring the voltage signal over the LRA by a sensor may be omitted. This omission may result in saving some silicon area in the electronic device. Similarly, in the case of a reliable current source, measuring the current signal may not be necessary; the current drive signal can be assumed as the actual current flowing in the LRA. However, if the error is substantial (as is often the case in integrated circuits), both voltage and current measurements may be needed. For example, if the voltage source example above outputs 1.05V (a 5% error), it becomes preferable to measure the voltage signal over the LRA. If sensors are used, the voltage and current sensor may measure continuously and samples are obtained at times of the intervals with nearly-constant non-zero current. The sensors may transform the analogue voltage and current signals from the LRA to digital signals.

The intervals with nearly-constant non-zero current may need to be identified in the current signal regardless of whether a voltage drive signal or a current drive signal is used. Particularly if a voltage drive signal is used, due to the reaction of the LRA, the current signal over the LRA may result in a slightly different shape in comparison to the voltage drive signal and potentially with some delay. As shown in Fig. 3A, the current signal may not have flat intervals or constant current but have a slightly curved or skewed shape. Thus the precise timing of the intervals may be unknown.

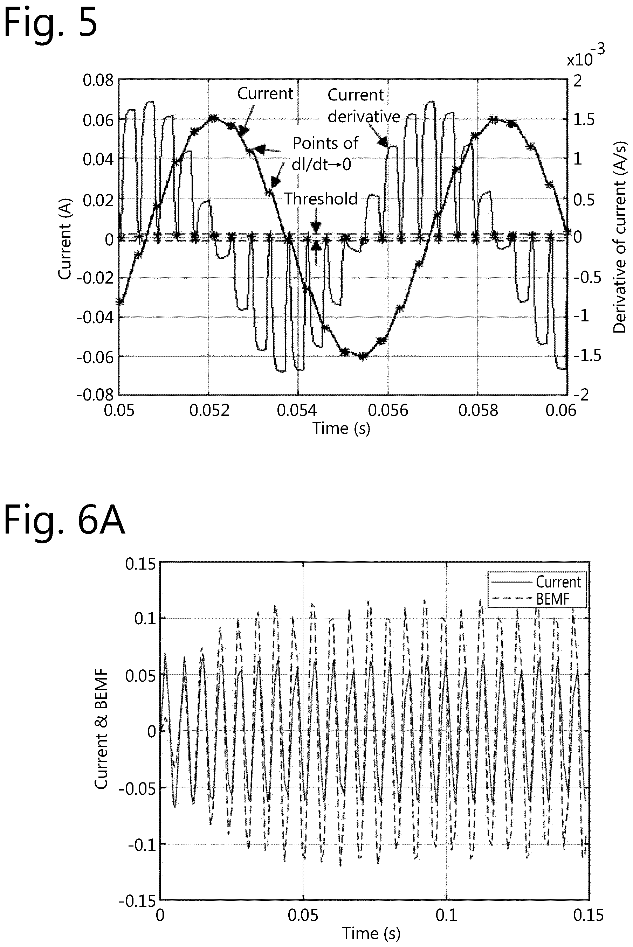

Figure 5 shows a method to identify intervals with nearly-constant non-zero current in the current signal over the LRA. First, the derivative of the current signal ($dI/dt$) is obtained (right Y-axis). Then the derivative current signal is compared with a pre-determined positive and negative threshold. If a value of the derivative is between the pre-determined positive and negative threshold (i.e., $dI/dt$ approximates 0), the current signal is considered to be constant (i.e., an interval with nearly-constant current has been identified) and the current and voltage over the LRA are sampled for calculation of the BEMF at the identified times of the intervals. Conversely, in the case of a current drive signal, times where the derivative of the current signal approaches zero are known, and the identification of the intervals with nearly-constant non-zero current becomes unnecessary. Consequently, samples from the voltage and current signals can be directly obtained to calculate the BEMF. This can simplify the design of the driver chip.

The pre-determined threshold may be adjustable and can be customized based on factors such as the type of LRA and the reliability of the drive signal source. The accuracy of the BEMF improves with a smaller pre-determined threshold. However, a cautionary balance is necessary, as an excessively small pre-determined threshold involves a risk of potentially missing the intervals. Especially when the current signal is susceptible to noise, as may occur when measuring the current signal over the LRA using a current sensor, substantial noise in the current signal leads to pronounced fluctuations in the derivative ($dI/dt$), which challenges identification of the intervals with nearly-constant non-zero current. In such instances, a more relaxed pre-determined threshold may be used at the expense of a less precise estimation of the BEMF signal. In this context, a minimum pre-determined threshold corresponds to precisely zero, indicating that the derivative of the current signal is exactly zero ($dI/dt = 0$). On the other end, a maximum pre-determined threshold may be set at 0.2 times the maximum derivative of current versus time ($max\ dI/dt$), denoted as $Smax$. For a current signal represented by a sine wave (e.g., $I = I_0 sin(2\pi ft)$), where $I_0$ is the amplitude of the current signal and $f$ is its frequency, the maximum derivative ($max(dI/dt)$) equals $Smax = I_0 2\pi f$. Consequently, the maximum pre-determined threshold is determined as $0.4\ I_0\pi f$. The pre-determined threshold is preferably set at 0.1 times $Smax$.

Optionally, with a voltage drive signal, models as the one described before can be used to predict the behaviour of the current associated with a known LRA. This prediction aims to identify in advance the times of the intervals with nearly-constant non-zero current. The prediction is presumed to be consistent for a given LRA type. The predicted times may be stored in the memory and utilized in the ongoing operation of the LRA. Rather than identifying the intervals during operation, the current and voltage may then be directly sampled at these predicted times.

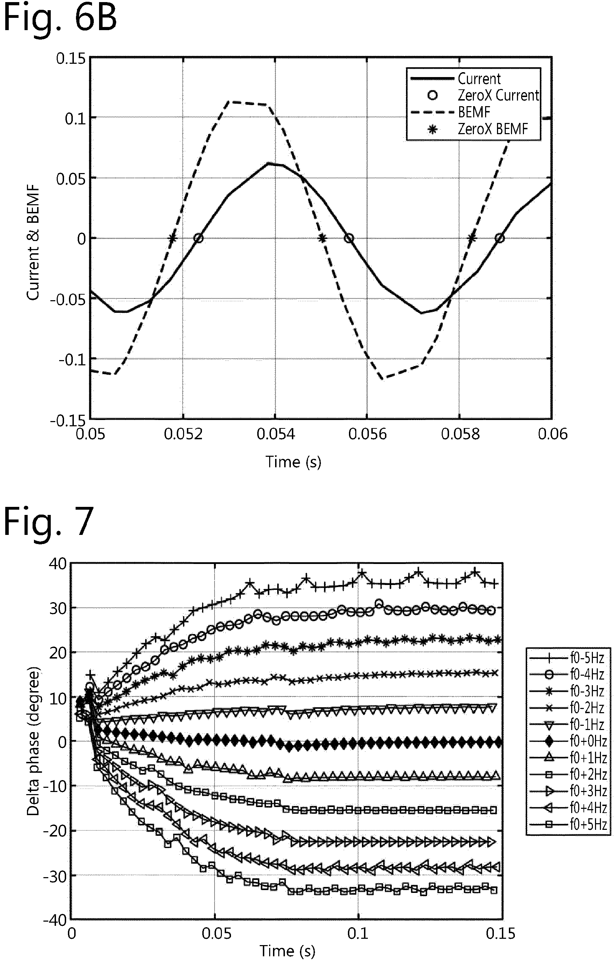

After obtaining samples of the voltage and current signals over the LRA at the intervals with nearly-constant non-zero current, the BEMF is calculated at these instances using equation (2) to reconstruct the BEMF signal. Figure 6A provides an illustration of the estimated BEMF signal alongside the current signal over the LRA, captured at the intervals with nearly-constant non-zero current. In this example, the LRA is driven by a base sine wave with a frequency of 5 Hz below the resonance frequency. Figure 6B shows a close-up view of Figure 6A. The zero-crossing points of the BEMF signal and the current signal serve as indicators of the phase difference ($\Delta\varphi$) between them. When the LRA is driven at a frequency below the resonance frequency, the current signal lags behind the BEMF signal, whereas driving the LRA at a frequency above the resonance frequency results in the current signal leading the BEMF signal.

The phase difference ($\Delta\varphi$) between the BEMF signal and the current signal over the LRA provides an indication of a frequency difference between the frequency of the drive signal and the resonance frequency of the LRA. According to the theory of forced vibration, when the LRA operates at its resonance frequency, the velocity of the moving mass is in phase with the force applied to it from a magnetic field induced by the current flowing through the coil. Consequently, the force acting on the moving mass is proportional to the current in the coil. Given that, by definition, the magnitude of the BEMF is proportional to the velocity of the moving mass, the BEMF is in phase with the current over the LRA when it operates at the resonance frequency. This inherent relationship between the BEMF and mechanical movement of the moving mass ensures a consistent phase alignment at the resonance frequency, regardless of the specific type of LRA, the coil inductance (Ls), or the ambient temperature.

As a result, a phase difference ($\Delta\varphi$) close to zero serves as an indication that the LRA is operating near its resonance frequency. Consequently, the adjusted frequency of the drive signal aligns with the resonance frequency of the LRA. Because the BEMF is mainly related to the mechanical movement of the moving mass, and less to series inductance Ls in equation (6), the phase alignment between the BEMF signal and the current signal at resonance should always occur, regardless the type of LRA, the inductance Ls of the coil, and the ambient temperature.

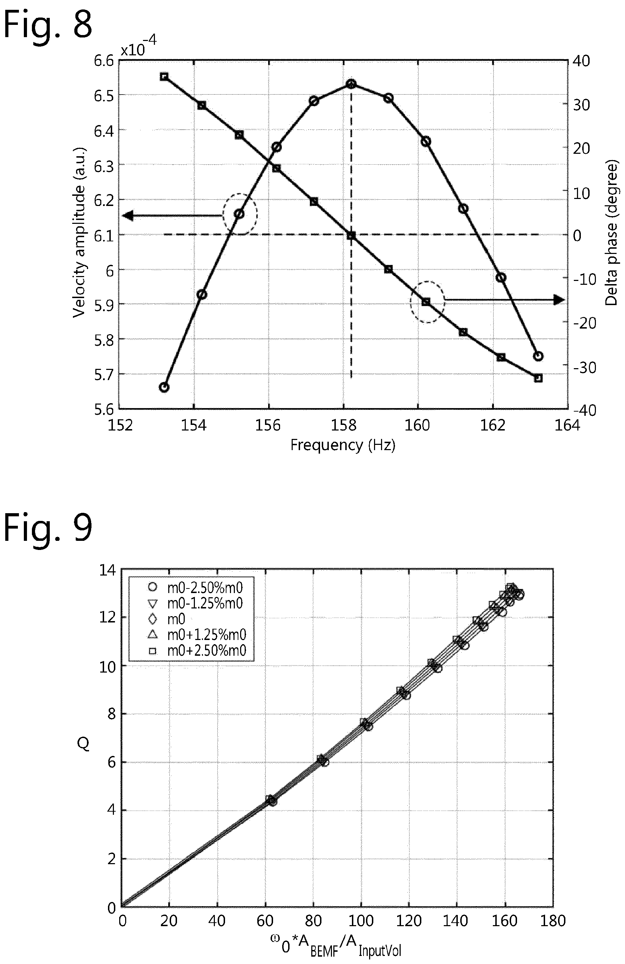

In Figure 7, various examples illustrate the phase difference ($\Delta\varphi$) as a function of time for different frequencies of the drive signal around the resonance frequency of the LRA. In these examples, it takes approximately 50 ms for the vibration amplitude in the LRA to stabilize. Before this moment, the BEMF signal is small and noisy, resulting in unreliable signal phases for an accurate determination of the phase difference ($\Delta\varphi$). The ramp-up time of the phase difference ($\Delta\varphi$) is depending on the Q factor of the LRA. If the driving frequency is below or above the resonance frequency, the phase difference ($\Delta\varphi$) is positive or negative, respectively. When the driving signal frequency aligns with the resonance frequency, the phase difference ($\Delta\varphi$) converges to zero. Figure 8 illustrates the phase difference ($\Delta\varphi$) at resonating steady state of the LRA with the velocity amplitude of the moving mass in the LRA vs. driving frequency (i.e., frequency of the drive signal) on the same graph. As the phase difference ($\Delta\varphi$) crosses zero, the velocity amplitude reaches its maximum, confirming the point of the resonance frequency. This example aligns with experiments conducted on an actual LRA sample.

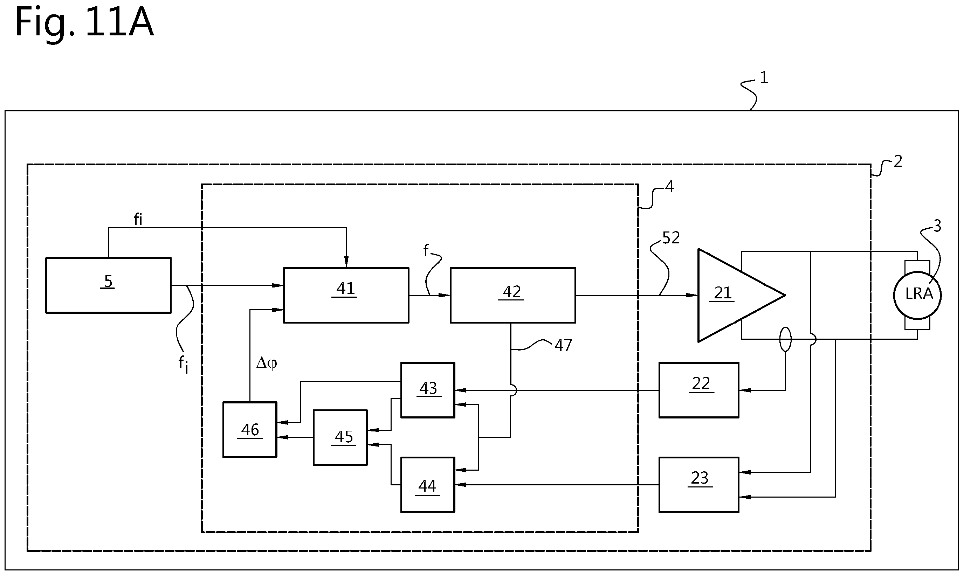

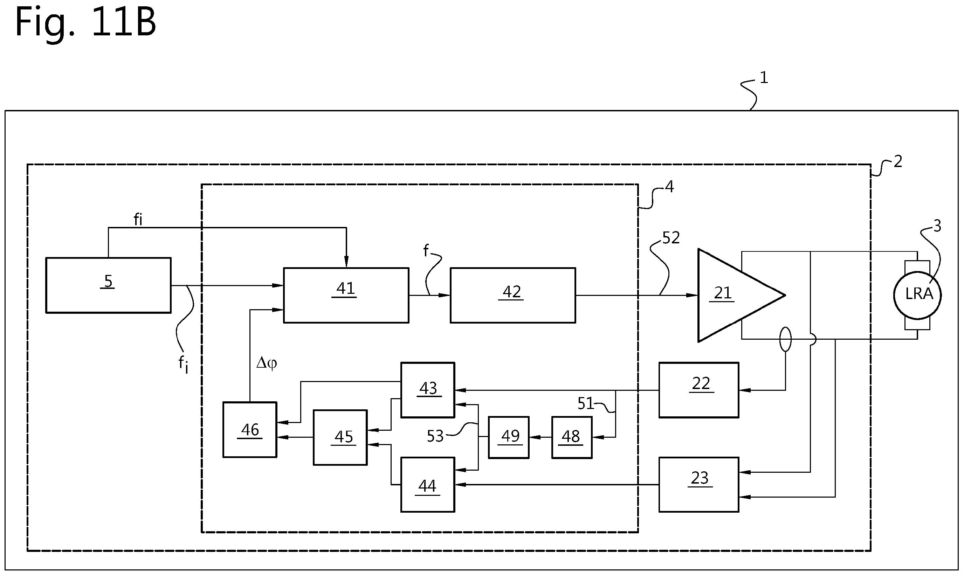

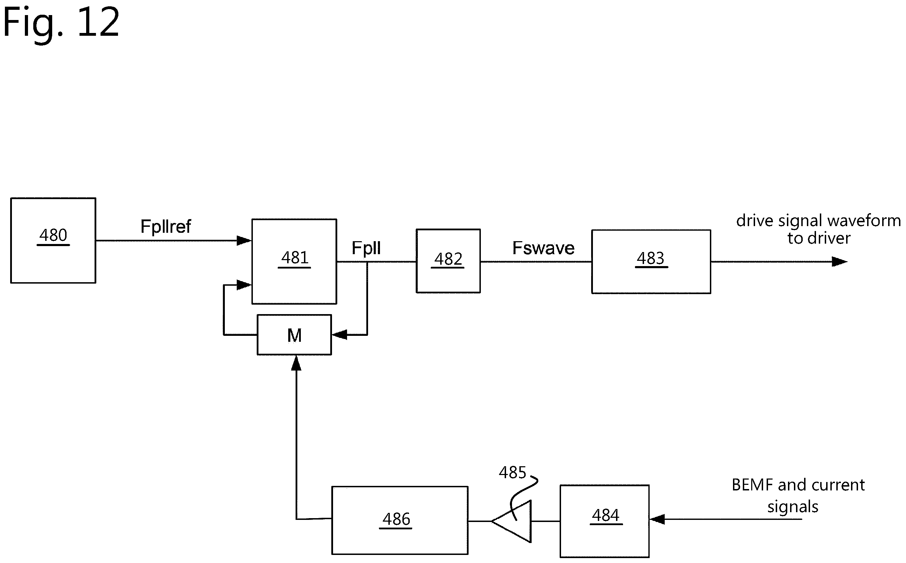

The phase difference ($\Delta\varphi$) between the BEMF and current signal is employed in a feedback loop to dynamically adjust (track) the base sinewave frequency, aiming for the convergence of the phase difference ($\Delta\varphi$) to zero (i.e., BEMF signal in phase with current signal). This alignment implies that the drive signal frequency has approached the resonant frequency. The implementation of feedback control can take two forms: through software or hardware as described below with reference to Figures 11 and 12.

Estimation of Q factor

The typical tracking process for the resonance frequency lasts approximately 10-20 drive signal periods or longer. Subsequently, the frequency of the drive signal can reach the resonant frequency and then the LRA is excited precisely at its resonant frequency. Towards the end of the haptic event, a specially designed braking signal is employed to quickly halt the vibration. Just before braking, the vibration amplitude of the LRA reaches a steady state, allowing for the estimation of the Q-factor. The identified Q-factor and resonance frequency can be stored in memory for subsequent haptic events. The Q factor of an LRA can be defined by equation (7)

$$Q = \omega_0 \frac{m}{b} \quad (7)$$

where $\omega_0$ is angular frequency derived from the frequency of the drive signal f0 ($\omega_0 = 2\pi f_0$), m is the mass of the moving mass in the LRA and b is a damping coefficient of the LRA .

According to the theory of forced vibration in a linear system, the steady-state resonant vibration amplitude is inversely proportional to the damping coefficient (1/b) when the moving mass is subjected to the same force amplitude. This implies that lower damping b results in a larger steady-state vibration amplitude. Moreover, the vibration amplitude is directly proportional to the velocity amplitude, which, as mentioned before, is proportional to the BEMF. Assuming a constant mass (m) and force amplitude, Q can be defined by equation (8).

$$Q = \beta . \omega_0 . \left(\frac{A_{BEMF}}{A_{Force}}\right) \quad (8)$$

where $\beta$ is a proportion factor, $A_{BEMF}$ is the BEMF amplitude at resonating steady state of the LRA, and $A_{Force}$ is the amplitude of the force. Thus, the linear relationship between Q and BEMF amplitude allows for determination of Q when the factor $\beta$ is known, and force amplitude is fixed.

Typically the LRA is excited with a fixed amplitude of the drive signal, $A_{InputVol}$. The relationship between voltage and force is influenced by the damping coefficient (b) due to changes in the electrical impedance of the LRA, and introduces a (slightly) non-linear dependency for Q in a voltage-driven system. This non-linearity can be approximated by a polynomial of at least 2nd order, as expressed in equation (9).

$$Q = \beta_0 + \beta_1 \omega_0 \frac{A_{BEMF}}{A_{InputVol}} + \beta_2 \left(\omega_0 \frac{A_{BEMF}}{A_{InputVol}}\right)^2 \dots \quad (9)$$

For a specific LRA, variations in Q with temperature arise due to the temperature-dependent nature of ω0 and b. Changes in resonant frequency with temperature occur because of temperature-dependent Young's modulus of the spring material, impacting the stiffness (k) of the spring. The damping coefficient may also vary with temperature due to the viscosity of the damping grease inside the LRA. The combined effects of stiffness and damping alterations result in a change in Q over the operational temperature range, typically a few times from 0 to 50 degrees Celsius. When temperature changes, the relationship Q vs. $\omega_0$ ($A_{BEMF}/A_{InputVol}$) follows the polynomial function described in equation (9). Calibration

curves (determining $\beta_{0-2}$) facilitate the calculation of Q at the end of the tracking process, where $\omega_0 = 2\pi f_0$, and the amplitude of BEMF at resonating steady state is known. Figure 9 illustrates simulation results of Q vs. $\omega_0$ ($A_{BEMF}/A_{InputVol}$) for five hypothetical LRAs of the same type, with the mass varying by $\pm 2.5\%$ over a temperature range from 0°C to 40°C. The data points are fitted to quadratic functions in accordance with equation (9). Figure 9 shows that the Q factor follows the function described in equation 9 despite of changes of temperature and moving mass in the LRA.

While the Q factor does not play a critical role in determining the phase difference ($\Delta\varphi$), it may significantly impact the sharpness of vibration patterns during a haptic event if it varies by more than approximately $\pm 20$ %, especially at a start and end of the drive signal, known as boost and brake parts, which directly influence the user's haptic perception. Knowledge of the Q factor may enhance the crispness of these patterns. Experimental findings indicate that the Q factor may fluctuate by up to $\pm 40$ %to $\pm 50$% across the consumer temperature range, e.g., 0°C to 40°C.

Calibration

The calibration process for determining parameters $\beta_{0-2}$ involves assembling an LRA inside a host device, such as a phone, during a factory calibration process. The steps for calibration are as follows:

- Determine resonant frequency of the LRA and the amplitude of BEMF at steady state using the tracking method according to this invention. Determine the Q factor using any known method, such as measuring the amplitude of BEMF at various frequency points around the resonance frequency and fitting the data to find Q. Alternatively, acceleration data from a built-in accelerometer in the phone can be used as a measurement for vibration amplitude.
- Repeat the same measurements at least with two more temperature points (T2, T3), ensuring that the temperature points are sufficiently spaced apart to obtain distinct Q values (e.g., T1 $\approx$ 0°C, T2 $\approx$ 20°C, and T3 $\approx$ 40°C). The exact temperature values are not critical.
- Fit the data of Q vs. $\omega_0$ ($A_{BEMF}/A_{InputVol}$) to a polynomial equation (such as equation (9)) to obtain the values of $\beta_{0-2}$.
- Store the determined values of $\beta_{0-2}$ in the memory of the host device.

Alternatively, calibration may be performed at a single ambient temperature but with at least two (using a linear function) or three (using a quadratic function) different amplitudes of the drive signal. Varying the power between these amplitudes of the drive signal induces temperature differences inside the LRA, leading to a change in the Q factor. It is crucial to choose amplitudes that are well-separated to ensure significant distinctions in Q factor values while remaining within the linear region of the device.

In yet another alternative, the calibration may be performed in a research and development (R&D) lab on several representative LRAs of the same type. Following this calibration, an average set of calibration coefficients $\beta_{0-2}$ is determined and stored in all devices (e.g., mobile phones) containing the same LRA type. During operation, this fixed set of calibration coefficients $\beta_{0-2}$ is used to estimate Q without repeating the calibration process for each device. While this is a practical and cost-effective approach, assuming a fixed set of calibration coefficients may introduce a small but acceptable error in Q due to minor sample-to-sample variations in the mass (m) of the moving mass in the LRAs.

Drive signal generation

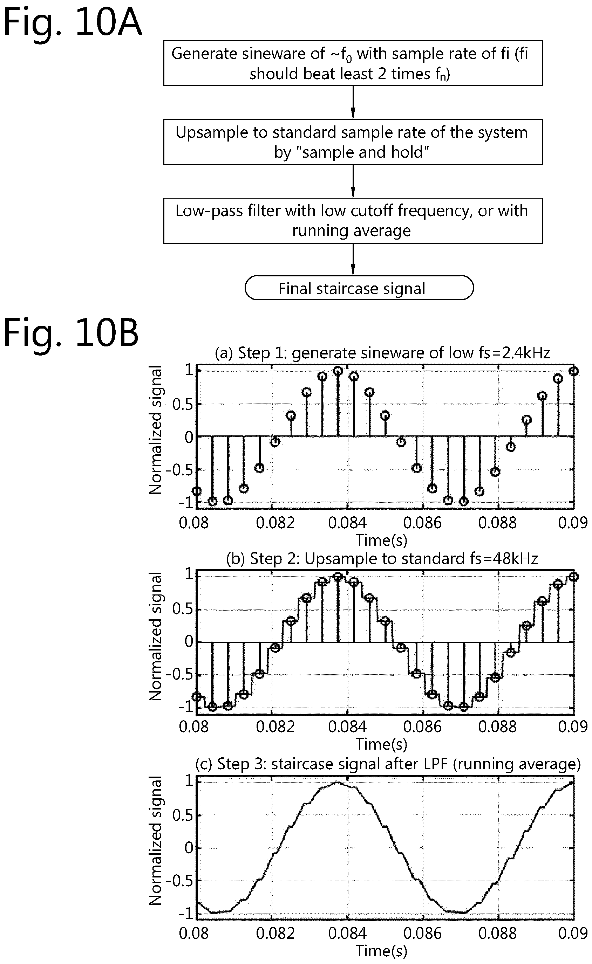

The drive signal may be generated using various methods known in the art. An example of a method to generate a drive signal, in particular a current drive signal is shown in the flowchart depicted in Figure 10A, with the drive signal construction illustrated in Figure 10B. In Step 1 a base sinewave is generated with a sampling rate of at least twice the highest possible value of the resonance frequency of the LRA. In this example, the frequency of the intervals with nearly-constant non-zero amplitude is set at 2.4 kHz, the generated discrete signal is shown in Fig. 10B(a). Subsequently, in Step 2, the base sinewave is up-sampled to the sampling rate of the electronic device, here 48 kHz, for example by using a "sample-and-hold" method, which creates a staircase pattern with high and low levels as illustrated in Figure 10B(b). In Step 3, the staircase signal undergoes low-pass filtering, e.g., a basic running average filter, to produce smooth staircase-like intervals in which the signal has nearly-constant amplitude, see Fig.10B(c). The running average filter smooths the staircase signal by averaging a set of samples, effectively reducing highfrequency noise while preserving lower-frequency components. The skilled person will recognize that the set of samples may have any suitable number of samples that smooths the staircase-like intervals in function of the number of samples in the staircase signal. Generally, a cutoff frequency of the low-pass filter should be significantly lower than the frequency of the intervals to smoothen the staircase-like shape and minimize its frequency contribution to the drive signal.

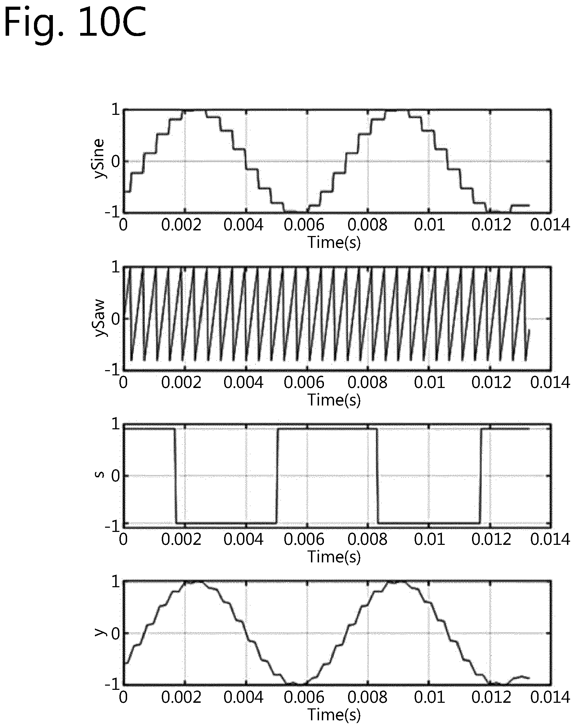

In another example, a method to generate a drive signal, particularly for generating a voltage drive signal, as described previously, may comprise superposition of a signal having flat or nearly-constant amplitude intervals with a product of a saw-tooth signal and a sign function, wherein the sign function has 2 values, e.g., +1 or -1. When multiplied to the original saw-tooth signal, the sign function modifies the saw-tooth signal such that a slope of the saw-tooth signal is positive on a positive slope of the sinewave signal, and a negative slope on the negative slope of the sine signal. That is, the sign signal has the value of +1 when the base sinewave is increasing and has the value of -1 when the base sinewave is decreasing. A method to generate a drive signal may comprise the following steps: Step 1, generate a base sinewave signal with an estimated frequency of the resonance frequency of the LRA (f0). Step 2, generate flat or nearly-constant amplitude intervals, with frequency fLow, on the base sinewave signal to form a new signal (ySine). Step 3, generate a saw-tooth signal ySaw, having the frequency fLow. Step 4, generate a sign function s, where s is positive on the increasing slope of the base sinewave signal, and negative on the decreasing slope of the base sinewave signal. Step 4, use superposition of the above generated signal according to: $y = ySine + alpha * s * ySaw$, wherein the + and * are element-wise operators and alpha is a factor defining the steepness of the slope. Step 5, smooth or low-pass the signal $y$, thereby forming the drive signal. Figure 10C shows the resultant signal y after superposition of the signals ySine, ySaw, and the sign function s, aligned in time domain. The signal y is similar to that previously described with reference to Figure 4B having sloped intervals where the slope size (mi) is smaller than a slope size of the sinewave (ms).

Software implementation for driving the LRA.

Embodiments of a method for driving the LRA will be described now. Any embodiment of the method to be described can be combined with any embodiment of a method for determining the phase difference between the BEMF signal and the current signal described above.

Figures 11A and 11B schematically illustrate examples of an electronic device 1 with a driver chip 2 for driving a LRA 3 and in which a method for driving an LRA according to the invention is at least partially software-implemented. In both examples depicted in Figures 11A and 11B, the driver chip 2 includes a processor 4 and a memory 5 operatively connected to each other. The processor 4 is used to control the frequency of the drive signal $f$ for the LRA 3. The processor 4 may for instance be a host processor outside the driver chip 2, or an embedded microcontroller or a Digital Signal Processor (DSP) inside the driver chip. The processor 4 comprises a controller 41, a signal generator 42, a first sampler block 43 to sample the current signal, a second sampler block 44 to sample the voltage signal, a BEMF calculator block 45 and a phase detector block 46. The memory 5 may hold parameters needed for the control algorithm that is carried out by the processor 4. In particular, the memory 5 holds an estimated resonance frequency of the LRA, which can be used as initial frequency $f_i$ for the drive signal. The initial frequency $f_i$ for the drive signal, and optionally other control parameters are received by the controller 41 from the memory 5. In addition, the memory 5 may store calibration coefficients $\beta$ and other values previously described. The signal generator 42 generates a digital vibration pattern (e.g., a sinewave) having intervals with nearly-constant non-zero current as described before with reference to Fig. 10A and 10B.

The driver chip 2 further includes a driver block 21, and optionally a current sense block 22 (measuring current over the LRA in series), and a voltage sense block 23 (measuring voltage over the LRA in parallel). The driver block 21 converts the digital vibration pattern into an analog signal to drive the LRA 3. The current and voltage sense blocks 22, 23 measure the current I and voltage V of the LRA 3 and optionally convert them into respective digital signals.

The raw digital signals from the optional voltage sense block 23 and current sense block 22 are fed into the processor 4, and sampled by samplers 43, 44 at the times of the intervals with nearly-constant non-zero current (i.e., when the derivative of the current signal approximates zero ($dI/dt \rightarrow 0$). Samplers 43, 44 may comprise additional blocks to condition or adapt the raw signals such as, for instance, low-pass filters.

As mentioned before, depending on whether a current or a voltage signal is used, sensing the current or the voltage signal, respectively, may be omitted. For instance, in the example of Figure 11A a current drive signal may be used and the signal generator 42 directly triggers, at the known times of nearly-constant non-zero current intervals, the samplers 43, 44 through trigger line 47. Alternatively, in the example of Figure 11B a voltage drive signal may be used, and the intervals with nearly-constant non-zero current may be identified in the measured current I over the LRA 51 (measured and/or converted by block 22) by a differentiator 48 and a threshold detector 49 as previously described. The threshold detector 49 triggers the samplers 43, 44, through trigger line 53 such that the voltage and the current signals are sampled at the identified times of the nearly-constant non-zero current intervals. Conversely, if a current drive signal is used, the differentiator 48 and the threshold detector 49 may be omitted as the times of the intervals are known.

After the BEMF is calculated by the BEMF calculator block 45, the phase difference ($\Delta\varphi$) between the BEMF signal and the current signal is calculated in the phase detector block 46. The phase difference ($\Delta\varphi$) at the output of this block is fed to the controller block 41 which is configured to adjust the frequency f that is inputted to the signal generator 42, such that the phase difference ($\Delta\varphi$) converges to zero.

In the beginning of a haptic vibration event, the controller 41 starts with an initial $f_i$, taken from the memory 5. This is typically a best-known value closest to the true resonant frequency of the LRA. The signal generator 42, which is located after the controller 41, takes a frequency output f of the controller 41 and generates a drive signal 52 (i.e., the digital vibration pattern), similar to those described with reference to Figs. 3A, 3B or 4. The drive signal is a full time-domain sinewave-like signal that is fed into the driver block 21. The driver block outputs the drive signal to the LRA 3 and the loop is continued.

The phase detector 46 calculates the phase difference $\Delta\varphi$ based on, for instance, a zero-crossing method. The phase detector 46 identifies when the signs of the current signal over the LRA and BEMF signal are reversed and selects two points in the current signal over the LRA and in the BEMF signal, one point just before and one point just after the reversal of the signs of the current signal over the LRA and the BEMF signal to calculate the phase difference ($\Delta\varphi$). The magnitude and time of the current and BEMF signals at these two points is used in a linear regression method to find the precise time of the actual zero-crossing point of the current and BEMF signals. The difference in the zero-crossing times of the current and BEMF signal is the phase difference ($\Delta\varphi$) to be found. This zero-crossing method has been found to provide good results. Nevertheless, it will be understood that many other suitable methods exist, such as fitting, modified Hilbert transform, Fast Fourier Transform, or dot product.

Hardware implementation for driving the LRA.

According to another important aspect of the invention, the method is directly implemented in the hardware of an electronic device. Figure 12 shows a block diagram of the hardware implementation of a method for driving an LRA according to the invention. The system has an oscillator, OSC, 480, which can be internal or external in the electronic device, a Phase Locked Loop (PLL) 481, a Div N divider block 482, a Wave Table generator 483, a phase detector 484 with an adjustable phase offset, a gain block P 485, and an integrator 486. The hardware implementation will also include a signal generator, a first sampler block to sample the current signal, a second sampler block to sample the voltage signal, and a BEMF calculator that operate with digital signals in the same manner as described previously with reference to Fig. 11. If a voltage drive signal is used, an analog differentiator may be included to obtain the derivative of the analog current signal. Similarly a threshold detector may also be included to operate analogously and output a digital trigger to the samplers.

The oscillator 480 provides a reference clock, *Fpllref,* to the PLL 481. The PLL further receives a feedback divider number M and provides a system clock, *Fpll* at its output, using the relation *Fpll = Fpllref · M* to the Div N divider block 482. The *Fpll* is divided by N times in the Div N divider block 482. The output of the Div N divider block 482 is *Fswave,* which is the sampling rate that is inputted to the Wave Table generator 483, which generates one cycle of the drive signal wave form. The drive signal wave form may for instance be a sine wave that is modified to include the intervals with nearly-constant non-zero amplitude and outputted to the driver of the LRA. One cycle of waveform consists of WTL number of samples, where WTL is the length of the wave table. For instance, WTL=128 samples. Thus, *f = Fswave / WTL,* where f is the frequency of the driving waveform.

The Wave Table generator 483 stores all samples of a full cycle of, for instance of a full single modified sinewave. To generate the drive signal, one needs to "playback" all the samples in the table, sample-by-sample. The wave table outputs samples of a complete period of the signal. The sample interval (time between samples) is 1/Fswave. Normally, in a conventional chip using PLL to generate waveforms, the system clock coming from the PLL 481 has a (fixed) feedback divider M, which would generate a fixed Fswave with a frequency of M/N times the reference clock according to equation (10).

$$M = \frac{N * F_{swave}}{F_{pllref}} = \frac{N * WTL * f}{F_{pllref}} \quad (10)$$

However, in this implementation, the feedback divider M is dynamically adjusted based on a measured phase difference. As equation (10) shows, an adjustment of the M-divider affect the drive frequency f, which is outputted to the driver of the LRA. The control of the PLL 481 is such that the system locks to the external driving frequency at resonance, f0, of the LRA.

A numerical example illustrating the adjustment of the frequency f of the drive signal dependent on the dynamically changing feedback divider number M is now provided. The reference clock is *Fpllref* = 500 *kHz,N* = $2^{19}$, *WTL* = 16, and when f should be fo, which is assumed to be 150 Hz, the divider M in this case is

$$M = \frac{N*WTL*f_0}{F_{pllref}} = \frac{2^{19}*16*150}{500e3} = 2517$$

During the tracking process, the integer feedback divider number M is dynamically changing. In this example, when M changes by 1 unit, $F_{swave}$ is changed by $500e3/(2^{19})$ = 0.95 Hz, and f is changed by 0.06 Hz, which determines the resolution of the tracking method.

By obtaining the voltage and the current over the LRA, calculating the BEMF and using a phase detector 484 to obtain the phase difference $\Delta\varphi$ between the BEMF signal and the current signal, the PLL 481 output frequency Fpll is tuned by changing the feedback division factor M. When the phase is positive, which means that the BEMF is running before the current, then the feedback divider number M increases and the Fpll will increase since Fpllref is fixed. This implies that when the phase difference is negative, the feedback divider number M decreases and Fpll will decrease and when the phase difference is positive, the feedback divider number M increases and Fpll will increase.

When the phase difference $\Delta\varphi$ reaches 0, the integrator input becomes 0 and the accumulation stops and fixes the M divider at the required division factor to be locked to the resonance frequency of the LRA. The overall system is a PI (Proportional-Integral) controlled system, in which M, the wavetable length WTL, the phase-to-frequency sensitivity of the LRA ($\Delta\varphi/\Delta f_{lra}$), and phase detector transfer determine the proportional part. By means of a gain P, overall Proportional gain can be adjusted, such that overall system stability is guaranteed and over/undershoots are limited.

Series resistance Rs

As previously discussed, the BEMF is calculated using the current and voltage sampled during the intervals with nearly-constant non-zero current, as per equation (2). This equation incorporates the value of Rs, which may be determined at each haptic event for accurate BEMF calculation. Since Rs is temperature-dependent and can vary significantly among LRAs, measuring Rs is important. Rs measurements can be conducted every time the driver chip is powered, on-demand between haptic events, or even during a haptic event. To measure Rs during the haptic event, a small DC or low-frequency single-tone signal, known as a "pilot tone" is superimposed on the drive signal. Typically, the amplitude of the pilot tone is very small, roughly one-tenth of the driving signal or even smaller. In the equivalent circuit illustrated in Fig. 2B, at DC or low frequency, the inductors Ls and Lm can be treated as shorts (ZLs=0; ZLm=0), transforming the LRA impedance into an (almost) purely resistive value equivalent to Rs. That is, *Rs = Vpilot / Ipilot,* where *Vpilot* and *Ipilot* are the voltage and current of the pilot tone measured over the LRA. Those quantities can be separated from the measured voltage and current in the frequency domain using the fast Fourier transform, FFT.

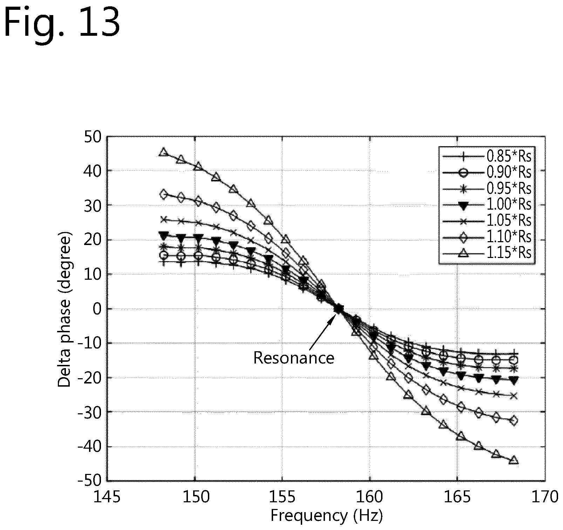

Rs is not critical for finding the resonance frequency, as BEMF is primarily used for determining the phase difference in the feedback control, the method remains robust against ambient temperature variations and other factors affecting Rs. At the resonance frequency, where BEMF and current signals are in phase during the intervals of nearly-constant current, the phase difference ($\Delta\varphi$) remains at zero irrespective of Rs. Consequently, even if Rs is inaccurately determined, the control can accurately track the resonance frequency. The only impact of an incorrect Rs lies in the slope of the phase difference ($\Delta\varphi$) vs. the frequency of the drive signal, affecting the tracking rate of the controller when the frequency approaches zero. Due to this, determining Rs at each vibration event may not be necessary. Optionally, Rs can be determined once in a factory test at a temperature approximately in the middle of the operational temperature range, stored in memory, and used in all subsequent haptic events. Figure 13 illustrates different curves of the phase difference ($\Delta\varphi$) vs. the frequency of the drive signal for varying values of Rs, up to $\pm15\%$ of the true Rs value, representing around $\pm20$ Celsius ambient temperature variation. Despite changes in the slope of the curve around resonance, the phase difference ($\Delta\varphi$) consistently remains precisely zero at the resonance frequency.

**Claims**

1. A method for driving a linear resonance actuator (LRA) in an electronic device, the method comprising:

   - providing a drive signal to the LRA, wherein the drive signal is configured such that, when the drive signal is provided to the LRA, each period of a current signal over the LRA has at least two intervals with nearly-constant non-zero current and substantially shorter duration than the period of the current signal, wherein the drive signal is an oscillating voltage or current drive signal;
   - determining a back electromotive force (BEMF) of the LRA at times corresponding to the at least two intervals with nearly-constant non-zero current, wherein the BEMF is determined based on the current signal over the LRA and a voltage signal over the LRA;
   - determining a phase difference ($\Delta\varphi$) between the BEMF signal and the current signal over the LRA; and
   - adjusting a frequency of the drive signal such that the phase difference ($\Delta\varphi$) converges to zero.

2. The method of claim 1, wherein if the drive signal is a voltage drive signal, the BEMF is determined based on the voltage drive signal and the current signal over the LRA; wherein if the drive signal is a current drive signal, the BEMF is determined based on the current drive signal and the voltage signal over the LRA; and optionally the method further comprises measuring the voltage signal and/or the current signal over the LRA by sensors in the LRA and/or by sensors in a LRA driver chip in the electronic device.

3. The method of claim 1 or claim 2, wherein if the drive signal is a current drive signal, each period has at least two intervals with nearly-constant non-zero current, and wherein if the drive signal is the voltage drive signal, each period has at least two intervals with non-zero voltage in which a slope of the current signal over the LRA within the intervals with non-zero voltage is smaller than a slope of the current signal over the LRA in the immediate vicinity of the intervals.

4. The method of claim 1 or claim 2, wherein the drive signal is the voltage drive signal and determining the BEMF signal comprises:

- identifying, in the current signal over the LRA, the times corresponding to the at least two intervals with nearly-constant non-zero current,
- obtaining samples of the voltage drive signal and/or the voltage signal over the LRA at the identified times,
- obtaining samples of the current signal over the LRA at the identified times, and
- calculating a BEMF signal based on the samples of the voltage drive signal, and/or the voltage signal over the LRA, and the current signal over the LRA at the identified times.

5. The method of claim 4, wherein identifying, in the current signal over the LRA, the times corresponding to the at least two intervals with nearly-constant non-zero current comprises:

- obtaining, from a memory in the electronic device, the times corresponding to the at least two intervals with nearly-constant non-zero current, and/or
- obtaining a derivative of the current signal over the LRA, and identifying in the current signal over the LRA where an absolute value of the derivative is below a threshold.

6. The method of claim 4 or claim 5, wherein the method further comprises:

- calculating a Quality-Factor (Q) after the LRA has reached a resonating steady state whereby the BEMF signal is nearly constant and the phase difference ($\Delta\varphi$) is nearly zero, and wherein the Q factor is calculated according to the following equation:

$$Q = \beta_0 + \beta_1 \omega_0 \frac{A_{BEMF}}{A_{InputVol}} + \beta_2 \left( \omega_0 \frac{A_{BEMF}}{A_{InputVol}} \right)^2$$

Where $\omega_0$ is angular frequency derived from the adjusted frequency of the voltage drive signal, $A_{BEMF}$ is the amplitude of the BEMF signal at the resonant steady state, $A_{InpulVol}$ is the amplitude of the voltage drive signal and $\beta_{0,1,2}$ are coefficients determined during a factory calibration of the LRA.

7. The method of claim 1 or claim 2, wherein the drive signal is a current drive signal and determining the BEMF signal comprises:

- obtaining samples of the current drive signal, and/or current signal over the LRA, and the voltage signal over the LRA at the times corresponding to the at least two intervals with nearly-constant non-zero current, and
- calculating a BEMF signal based on the samples of the current drive signal, and/or the current signal over the LRA, and the voltage signal over the LRA.

8. The method of any preceding claim, wherein adjusting the frequency of the drive signal is performed by using a feedback control loop, and wherein adjusting the frequency of the drive signal comprises:

- increasing the frequency of the drive signal when the BEMF signal is leading the current signal over the LRA, and
- decreasing the frequency of the drive signal when the BEMF signal is lagging the current signal over the LRA.

9. The method of any preceding claim, wherein the drive signal has a sinewave shape; and/or wherein the drive signal has zero-mean and/or wherein the at least two intervals with nearly-constant non-zero current are located in the vicinity of zero-crossing points of the current signal over the LRA; and/or wherein the at least two intervals with nearly-constant non-zero current are at both positive and negative phases of the current signal.

10. The method of any preceding claim, wherein a frequency of the at least two intervals with nearly-constant non-zero current is at least two times higher than a resonant frequency of the LRA plus a best-known margin of sample-to-sample variation and temperature variation of the resonant frequency of the LRA, preferably at least 650 Hz.

11. The method of any preceding claim, wherein an initial frequency of the drive signal before it is provided to the LRA is a pre-determined estimate of a resonance frequency of the LRA, which is provided from a memory in the electronic device and/or is a best-guessed estimate of the resonance frequency of the LRA.

**12.** The method of any preceding claim, further adding a Direct Current, DC, or low frequency signal to the drive signal for measuring a resistance of the LRA.

**13.** A processing system in a driver chip for driving the LRA, the system comprising a processor and a memory operatively connected thereto wherein the processor is configured to perform the method of any of the claims 1-12.

**14.** The method of any one of the claims 1-12, wherein determining a phase difference ($\Delta\varphi$) between the BEMF signal and the current signal over the LRA comprises:

determining the phase difference signal between the BEMF signal and the current signal over the LRA by a phase detector circuit to generate a phase-difference signal,
scaling the phase difference signal by a factor P by a gain block, and
integrating the phase difference ($\Delta\varphi$) signal by an integration block;

wherein adjusting the frequency of the drive signal using a feedback control loop comprises:
adjusting a feedback divider number M of a phase-locked loop based on the integrated phase difference signal, wherein the phase-locked loop is locked into a reference signal from an oscillator.

**15.** A control circuit configured to drive a linear resonance actuator, LRA, the control circuit comprising:

A Phase Locked Loop, PLL, configured to receive a reference clock from an oscillator and output a system clock based on a received feedback divider number, M, wherein the feedback divider number M has a pre-determined initial value and is dynamically adjusted based on an integration of a phase difference signal between a BEMF and a current over the LRA;
divider means configured to receive the system clock of the PLL and output a sampling rate based on the received system clock;
Wave Table generator means, configured to receive the sampling rate and generate a pattern or wave to output to a driver of the LRA.

**Amended claims in accordance with Rule 137(2) EPC.**

**1.** A method for driving a linear resonance actuator (LRA) in an electronic device, the method comprising:

- providing a drive signal to the LRA, wherein the drive signal is configured such that, when the drive signal is provided to the LRA, a current signal over the LRA resembles a sine or a cosine wave, with each period of the sine or cosine wave having at least two intervals with nearly-constant non-zero current, wherein each interval has a substantially shorter duration than the period of the current signal over the LRA, wherein the drive signal is an oscillating voltage drive signal or an oscillating current drive signal;
- determining a back electromotive force (BEMF) of the LRA at times corresponding to the at least two intervals with nearly-constant non-zero current, wherein the BEMF is determined based on the current signal over the LRA and a voltage signal over the LRA;
- determining a phase difference ($\Delta\varphi$) between the BEMF signal and the current signal over the LRA; and
- adjusting a frequency of the drive signal such that the phase difference ($\Delta\varphi$) converges to zero, wherein adjusting the frequency of the drive signal is performed by using a feedback control loop, and comprises:
- increasing the frequency of the drive signal when the BEMF signal is leading the current signal over the LRA, and
- decreasing the frequency of the drive signal when the BEMF signal is lagging the current signal over the LRA;
wherein in the at least two intervals of nearly-constant non-zero current, the time derivative of the current signal over the LRA is at most 0.2 times the maximum time derivative of the sine or cosine wave of the current over the LRA.

**2.** The method of claim 1, wherein if the drive signal is an oscillating voltage drive signal, the BEMF is determined based on the oscillating voltage drive signal and the current signal over the LRA; wherein if the drive signal is an oscillating current drive signal, the BEMF is determined based on the oscillating current drive signal and the voltage signal over the LRA.

3. The method of claim 1 or claim 2, wherein if the drive signal is an oscillating current drive signal, each period of the drive signal has at least two intervals with nearly-constant non-zero current, and wherein if the drive signal is an oscillating voltage drive signal, each period of the drive signal has at least two intervals with non-zero voltage in which a magnitude of a slope of the of the drive signal within the non-zero voltage is smaller than a magnitude of a slope of the drive signal in the immediate vicinity of the non-zero voltage intervals.

4. The method of claim 1 or claim 2, wherein the drive signal is an oscillating voltage drive signal and determining the BEMF signal comprises:

   - identifying, in the current signal over the LRA, the times corresponding to the at least two intervals with nearly-constant non-zero current,
   - obtaining samples of the voltage drive signal and/or the oscillating voltage signal over the LRA at the identified times,
   - obtaining samples of the current signal over the LRA at the identified times, and
   - calculating a BEMF signal based on the samples of the oscillating voltage drive signal, and/or the voltage signal over the LRA, and the current signal over the LRA at the identified times.

5. The method of claim 4, wherein identifying, in the current signal over the LRA, the times corresponding to the at least two intervals with nearly-constant non-zero current comprises:

   - obtaining, from a memory in the electronic device, the times corresponding to the at least two intervals with nearly-constant non-zero current, and/or
   - obtaining a derivative of the current signal over the LRA, and identifying in the current signal over the LRA where an absolute value of the derivative is below a threshold.

6. The method of claim 4 or claim 5, wherein the method further comprises:

   - calculating a Quality-Factor (Q) after the LRA has reached a resonating steady state whereby the BEMF signal is nearly constant and the phase difference ($\Delta\varphi$) is nearly zero, and wherein the Q factor is calculated according to the following equation:

$$Q = \beta_0 + \beta_1 \omega_0 \frac{A_{BEMF}}{A_{InputVol}} + \beta_2 \left( \omega_0 \frac{A_{BEMF}}{A_{InputVol}} \right)^2$$

   Where $\omega_0$ is angular frequency derived from the adjusted frequency of the voltage drive signal, $A_{BEMF}$ is the amplitude of the BEMF signal at the resonant steady state, $A_{InputVol}$ is the amplitude of the oscillating voltage drive signal and $\beta_{0,1,2}$ are coefficients determined during a factory calibration of the LRA.

7. The method of claim 1 or claim 2, wherein the drive signal is an oscillating current drive signal and determining the BEMF signal comprises:

   - obtaining samples of the oscillating current drive signal, and/or current signal over the LRA, and the voltage signal over the LRA at the times corresponding to the at least two intervals with nearly-constant non-zero current, and
   - calculating a BEMF signal based on the samples of the current drive signal, and/or the current signal over the LRA, and the voltage signal over the LRA.

8. The method of any preceding claim, further comprising measuring the voltage signal and/or the current signal over the LRA by sensors in the LRA and/or by sensors in a LRA driver chip in the electronic device.

9. The method of any preceding claim, wherein the drive signal has a sinewave shape; and/or wherein the drive signal has zero-mean and/or wherein the at least two intervals with nearly-constant non-zero current are located in the vicinity of zero-crossing points of the current signal over the LRA; and/or wherein the at least two intervals with nearly-constant non-zero current are at both positive and negative phases of the current signal.

10. The method of any preceding claim, wherein a frequency of the at least two intervals with nearly-constant non-zero current is at least two times higher than a resonant frequency of the LRA, preferably at least 650 Hz.

11. The method of any preceding claim, wherein an initial frequency of the drive signal before it is provided to the LRA is a pre-determined estimate of a resonance frequency of the LRA, which is provided from a memory in the electronic device and/or is based on the type and manufacturing details of the LRA.

12. The method of any preceding claim, further adding a Direct Current, DC, or low frequency signal to the drive signal.

13. A processing system in a driver chip for driving the LRA, the system comprising a processor and a memory operatively connected thereto wherein the processor is configured to perform the method of any of the claims 1-12.

14. The method of any one of the claims 1-12, wherein determining a phase difference ($\Delta\varphi$) between the BEMF signal and the current signal over the LRA comprises:

   determining the phase difference signal between the BEMF signal and the current signal over the LRA by a phase detector circuit to generate a phase-difference signal,
   scaling the phase difference signal by a factor P by a gain block, and
   integrating the phase difference ($\Delta\varphi$) signal by an integration block; wherein adjusting the frequency of the drive signal using a feedback control loop comprises:
   adjusting a feedback divider number M of a phase-locked loop based on the integrated phase difference signal, wherein the phase-locked loop is locked into a reference signal from an oscillator.

15. A control circuit configured to drive a linear resonance actuator, LRA, and perform the method of claim 14, the control circuit comprising:

   A Phase Locked Loop, PLL, configured to receive a reference clock from an oscillator and output a system clock based on a received feedback divider number, M, wherein the feedback divider number M has a pre-determined initial value and is dynamically adjusted based on an integration of a phase difference signal between a BEMF and a current over the LRA;
   divider means configured to receive the system clock of the PLL and output a sampling rate based on the received system clock;
   Wave Table generator means, configured to receive the sampling rate and generate a pattern or wave to output to a driver of the LRA.

# Fig. 1
-Prior Art-

# Fig. 2A

# Fig. 2B

## Fig. 3A

## Fig. 3B

# Fig. 4A

Voltage drive signal    Current signal over the LRA

Flat voltage interval

Sloped voltage interval

$dI/dt \to 0$

# Fig. 4B

$m_s$

$m_i$

Voltage (V)

$\sim 1/f_0$

Time (s)

# Fig. 5

# Fig. 6A

# Fig. 6B

# Fig. 7

## Fig. 8

## Fig. 9

# Fig. 10A

Generate sineware of ~$f_0$ with sample rate of fi (fi should beat least 2 times $f_n$)

↓

Upsample to standard sample rate of the system by "sample and hold"

↓

Low-pass filter with low cutoff frequency, or with running average

↓

Final staircase signal

# Fig. 10B

(a) Step 1: generate sineware of low fs=2.4kHz

(b) Step 2: Upsample to standard fs=48kHz

(c) Step 3: staircase signal after LPF (running average)

# Fig. 10C

Fig. 11A

# Fig. 11B

# Fig. 12

# Fig. 13

Europäisches
Patentamt

European
Patent Office

Office européen
des brevets

# EUROPEAN SEARCH REPORT

**Application Number**

EP 24 17 3415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 229 774 B1 (YASUDA TAKEO [JP]) 8 May 2001 (2001-05-08) * the whole document * | 15 | INV. H02P25/032 H02P25/034 H02P25/06 |
| A | US 2021/263590 A1 (LEE SU YEOL [KR] ET AL) 26 August 2021 (2021-08-26) * the whole document * | 1-15 | |
| A | US 10 308 354 B2 (BLACK PAUL [US]; SWANSON DOUG [US] ET AL.) 4 June 2019 (2019-06-04) * the whole document * | 1-15 | |
| A | US 9 121 753 B2 (CAHILL ALAN PATRICK [IE]; CASEY GARY [IE] ET AL.) 1 September 2015 (2015-09-01) * the whole document * | 1-15 | |

**TECHNICAL FIELDS SEARCHED (IPC)**

H02P

The present search report has been drawn up for all claims

| Place of search | Date of completion of the search | Examiner |
|---|---|---|
| Munich | 19 September 2024 | Roussel, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3415

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | | Publication date | Patent family member(s) | | Publication date |
|---|---|---|---|---|---|
| US 6229774 | B1 | 08-05-2001 | JP | H11214990 A | 06-08-1999 |
| | | | US | 6229774 B1 | 08-05-2001 |
| US 2021263590 | A1 | 26-08-2021 | CN | 112384882 A | 19-02-2021 |
| | | | JP | 7145985 B2 | 03-10-2022 |
| | | | JP | 2021529655 A | 04-11-2021 |
| | | | KR | 20200001772 A | 07-01-2020 |
| | | | US | 2021263590 A1 | 26-08-2021 |
| | | | WO | 2020004841 A1 | 02-01-2020 |
| US 10308354 | B2 | 04-06-2019 | EP | 2670661 A1 | 11-12-2013 |
| | | | KR | 20140053851 A | 08-05-2014 |
| | | | KR | 20170065667 A | 13-06-2017 |
| | | | US | 2013311012 A1 | 21-11-2013 |
| | | | US | 2018346106 A1 | 06-12-2018 |
| | | | WO | 2012106616 A1 | 09-08-2012 |
| US 9121753 | B2 | 01-09-2015 | US | 2014217945 A1 | 07-08-2014 |
| | | | WO | 2014122517 A2 | 14-08-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9054627 B